(19) **Europäisches Patentamt**
**European Patent Office**
**Office européen des brevets**

(11) **EP 4 567 536 A1**

(12) **EUROPEAN PATENT APPLICATION**
published in accordance with Art. 153(4) EPC

(43) Date of publication:
**11.06.2025 Bulletin 2025/24**

(21) Application number: **22957453.8**

(22) Date of filing: **02.09.2022**

(51) International Patent Classification (IPC):
***G05B 23/02*** *(2006.01)*

(52) Cooperative Patent Classification (CPC):
**G05B 23/02**

(86) International application number:
**PCT/JP2022/033076**

(87) International publication number:
**WO 2024/047859 (07.03.2024 Gazette 2024/10)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **MITSUBISHI ELECTRIC CORPORATION**
**Chiyoda-ku**
**Tokyo 100-8310 (JP)**

(72) Inventors:
 • **KUWAJIMA, Kohei**
  **Tokyo 100-8310 (JP)**
 • **TATEDOKO, Masashi**
  **Tokyo 100-8310 (JP)**

(74) Representative: **Pfenning, Meinig & Partner mbB**
**Patent- und Rechtsanwälte**
**Theresienhöhe 11a**
**80339 München (DE)**

(54) **ABNORMALITY DETECTING DEVICE, ABNORMALITY DETECTING METHOD, AND ABNORMALITY DETECTING PROGRAM**

(57) An abnormality detection apparatus (100) detects an abnormality of a facility. A model generation unit (110) extracts a feature amount of control signal time series data (143) as training data, and generates a control signal model (144) that outputs an abnormality degree for each control signal from the time series data of the control signal based on the training data. A reliability calculation unit (120) calculates the reliability of the control signal in a specific time range by inputting to the control signal model (144), the time series data of the control signal in the specific time range of an abnormality detection result detected in a sensor signal, as verification data. An abnormality diagnosis unit (130) outputs information in which the reliability of the control signal in the specific time range is added to the abnormality detection result in the specific time range, as an abnormality diagnosis result (146).

Fig. 2

## Description

### Technical Field

The present disclosure relates to an abnormality detection apparatus, an abnormality detection method, and an abnormality detection program.

### Background Art

For a facility such as a power generation plant, the cost of suspension due to a factor such as a failure is enormous. For this reason, efforts have been made to implement predictive maintenance by introducing abnormality detection apparatuses. Here, since there is extremely little data when an abnormality occurs in abnormality detection on the facility such as a power generation plant, a technique called outlier detection is used.

In the outlier detection, a model that consists of a calculation formula for an abnormality degree and a threshold value for determining an abnormality is generated from training data which is data that does not include an abnormality or data that almost does not include an abnormality. Then, the abnormality degree is calculated by applying to the model, verification data which is data that is unclear whether the data is abnormal or normal, and when the abnormality degree is equal to or greater than the threshold value, it is determined to be abnormal.

The facility such as a power generation plant has various modes. The various modes refer to, for example, in the case of the power generation plant, control states that are not related to normal or abnormal, such as activation of the power generation plant, suspension, and a state in which a power generation amount is constant, and a transition state in which the power generation amount is switched from 100% to 80%.

In a facility having the various modes, there is an imbalance in a data amount for each mode, and the data amount for some modes may be extremely low. As a result, if the data for a mode is low, verification data from the normal facility may be erroneously detected as abnormal due to the nature of outlier detection.

In the technique described in Patent Literature 1, training data and verification data are divided in a time series direction for each mode based on a combination of an event such as start/suspend output by a facility or occurrence of an alert, and its occurrence time. Then, the technique described in Patent Literature 1 generates a model using the divided data, and adjusts a threshold value depending on the sufficiency of the divided data.

### Citation List

### Patent Literature

[Patent Literature 1] JP 2015-172945 A

### Summary of Invention

### Technical Problem

In the following description, data related to a sensor attached to a facility will be referred to as a sensor signal, data related to a command value for controlling the facility will be referred to as a control signal, and data related to a combination of an event such as start/suspend output by the facility or occurrence of an alert, and its occurrence time will be referred to as an event signal.

When an abnormality occurs at a facility such as a power generation plant and the facility is to be inspected, it is necessary to suspend the facility. When the facility is suspended, there will be a cost associated with the suspension or a loss of opportunity due to the suspension of the facility. Therefore, it is necessary for a person to carefully examine the result of an abnormality detection apparatus and perform the final determination to suspend the facility.

In the method described in Patent Literature 1, the sufficiency of a data amount in the training data for each mode is used only when a model is generated. Therefore, when an abnormality detection result of the abnormality detection apparatus is abnormal, it cannot be described whether the abnormality is determined when there is enough training data in the same mode as the mode of the verification data, or the abnormality is determined when the training data is extremely low. Therefore, there is a problem in that it is necessary for a person who performs the suspension determination to perform data analysis to determine the above, and a determination cost is high.

In the present disclosure, a control signal model for calculating an abnormality degree of a control signal is generated by applying to time series data of a control signal indicating a mode, the same technique as outlier detection used for abnormality detection of a sensor signal. Thereby, the present disclosure aims to calculate from the abnormality degree of the control signal, the reliability of an abnormality detection result determined based on time series data of a sensor signal.

**Solution to Problem**

An abnormality detection apparatus according to the present disclosure that includes a sensor and detects an abnormality of a facility controlled by a control signal, the abnormality detection apparatus includes:

a reliability calculation unit to obtain an abnormality degree of a control signal in a specific time range by inputting to a control signal model which is a model that is generated based on training data which is a feature amount of time series data of a past control signal and outputs the abnormality degree for each control signal from the time series data of the control signal, the time series data of the control signal in the specific time range of an abnormality detection result detected in a sensor signal obtained from the sensor, as verification data, and to calculate the reliability of the control signal in the specific time range and;

an abnormality diagnosis unit to output information in which the reliability of the control signal in the specific time range is added to the abnormality detection result in the specific time range, as an abnormality diagnosis result.

**Advantageous Effects of Invention**

An abnormality detection apparatus according to the present disclosure uses for time series data of a control signal indicating a mode, a control signal model for calculating an abnormality degree of the control signal. The control signal model is a model that is generated based on training data which is a feature amount of time series data of a past control signal and outputs the abnormality degree for each control signal from the time series data of the control signal. Therefore, according to the abnormality detection apparatus according to the present disclosure, it is possible to calculate from the abnormality degree of the control signal, the reliability of an abnormality detection result determined based on time series data of a sensor signal. Thereby, according to the abnormality detection apparatus according to the present disclosure, it is possible to immediately determine whether the time series data of the sensor signal being diagnosed by the abnormality detection apparatus is determined to be abnormal in a mode in which the data amount is sufficient, or is determined to be abnormal in a mode in which the data amount is extremely low.

**Brief Description of Drawings**

Fig. 1 is a diagram illustrating a hardware configuration example of an abnormality detection apparatus according to Embodiment 1.

Fig. 2 is a diagram illustrating a functional configuration example of the abnormality detection apparatus according to Embodiment 1.

Fig. 3 is a diagram illustrating a configuration example of correspondence information according to Embodiment 1.

Fig. 4 is a diagram illustrating a configuration example of abnormality detection technique information according to Embodiment 1.

Fig. 5 is a diagram illustrating a configuration example of control signal time series data according to Embodiment 1.

Fig. 6 is a diagram illustrating a configuration example of abnormality detection result information according to Embodiment 1.

Fig. 7 is a flow diagram illustrating operation of a model generation unit according to Embodiment 1.

Fig. 8 is a diagram illustrating a state in which the correspondence information of Fig. 3 and the abnormality detection technique information of Fig. 4 are combined according to Embodiment 1.

Fig. 9 is a flow diagram illustrating operation of a reliability calculation unit according to Embodiment 1.

Fig. 10 is a diagram illustrating an example of how an abnormality diagnosis result is obtained by an abnormality diagnosis unit according to Embodiment 1.

Fig. 11 is a flow diagram illustrating operation of the abnormality diagnosis unit according to Embodiment 1.

Fig. 12 is a flow diagram illustrating a learning process to generate a control signal model during an abnormality detection process according to Embodiment 1.

Fig. 13 is a flow diagram illustrating an estimation process to obtain an abnormality degree from the control signal model during the abnormality detection process according to Embodiment 1.

Fig. 14 is a diagram illustrating a configuration example of the abnormality detection apparatus according to Modification 2 of Embodiment 1.

Fig. 15 is a diagram illustrating a configuration example of the correspondence information according to Embodiment 2.

Fig. 16 is a diagram illustrating a configuration example of the abnormality detection technique information according to Embodiment 2.

Fig. 17 is a diagram illustrating an example of a result of combining the correspondence information and the abnormality detection technique information according to Embodiment 2.

Fig. 18 is a diagram illustrating an example of how the abnormality diagnosis result is obtained by the abnormality diagnosis unit according to Embodiment 2.

Fig. 19 is a flow diagram illustrating the operation of the abnormality diagnosis unit according to Embodiment 2.

Fig. 20 is a diagram illustrating a functional configuration example of the abnormality detection apparatus according to Embodiment 3.

Fig. 21 is a diagram illustrating a functional example of event signal information according to Embodiment 3.

Fig. 22 is a diagram illustrating an example of mode division in a case where the event signal information according to Embodiment 3 is as illustrated in Fig. 21.

Fig. 23 is a flow diagram illustrating operation by a mode division unit according to Embodiment 3.

Fig. 24 is a flow diagram illustrating processing during learning to generate the control signal model according to Embodiment 3.

Fig. 25 is a flow diagram illustrating processing during estimation to obtain the abnormality degree from the control signal model according to Embodiment 3.

**Description of Embodiments**

The present embodiments will be described below with reference to the drawings. In the drawings, the same or equivalent portions are denoted by the same reference signs. In the description of the embodiments, description for the same or equivalent portions will be omitted or simplified as appropriate. Arrows in the drawings mainly indicate data flows or process flows.

Embodiment 1.

*** Description of Configuration ***

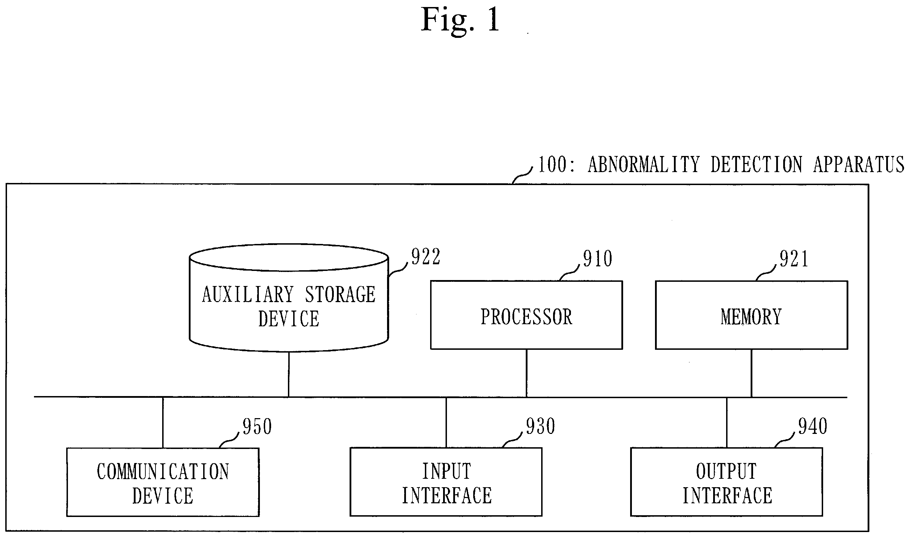

Fig. 1 is a diagram illustrating a hardware configuration example of an abnormality detection apparatus 100 according to the present embodiment.

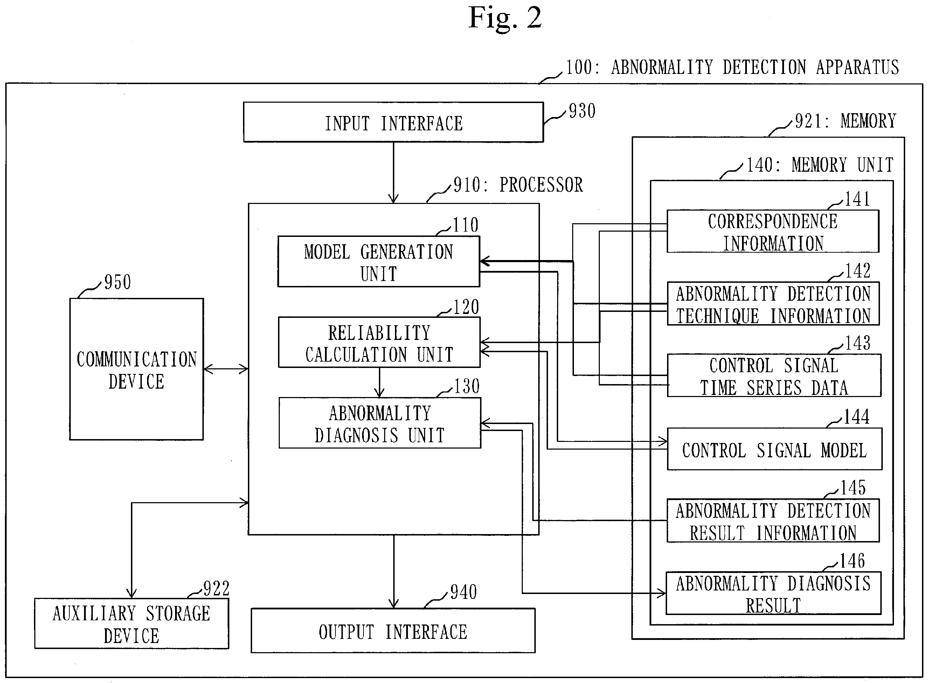

Fig. 2 is a diagram illustrating a functional configuration example of the abnormality detection apparatus 100 according to the present embodiment.

The abnormality detection apparatus 100 detects an abnormality of a facility. The facility includes a sensor and is controlled by a control signal. The abnormality detection apparatus 100 detects the abnormality of the facility according to a sensor signal obtained from the sensor, and determines the reliability of a detection result when the abnormality is detected.

The abnormality detection apparatus 100 is a computer. The abnormality detection apparatus 100 includes a processor 910 and also includes other pieces of hardware such as a memory 921, an auxiliary storage device 922, an input interface 930, an output interface 940, and a communication device 950. The processor 910 is connected to other pieces of hardware via signal lines and controls these other pieces of hardware.

The abnormality detection apparatus 100 includes a model generation unit 110, a reliability calculation unit 120, an abnormality diagnosis unit 130, and a memory unit 140, as functional elements.

The memory unit 140 stores correspondence information 141, abnormality detection technique information 142, control signal time series data 143, a control signal model 144, abnormality detection result information 145, and an abnormality diagnosis result 146.

The abnormality detection apparatus 100 is an apparatus that calculates the reliability of an abnormality detection result related to the facility based on data stored in the memory unit 140.

Functions of the model generation unit 110, the reliability calculation unit 120, and the abnormality diagnosis unit 130 are implemented by software. The memory unit 140 is included in the memory 921. The memory unit 140 may be included in the auxiliary storage device 922, or may be included in a distributed manner in the memory 921 and the auxiliary storage device 922.

The processor 910 is a device that executes an abnormality detection program. The abnormality detection program is a program that implements the functions of the model generation unit 110, the reliability calculation unit 120, and the abnormality diagnosis unit 130.

The processor 910 is an IC that performs arithmetic processing. Specific examples of the processor 910 are a CPU, a DSP, and a GPU. IC is an abbreviation for Integrated Circuit. CPU is an abbreviation for Central Processing Unit. DSP is an abbreviation for Digital Signal Processor. GPU is an abbreviation for Graphics Processing Unit.

The memory 921 is a storage device that temporarily stores data. A specific example of the memory 921 is an SRAM or a DRAM. SRAM is an abbreviation for Static Random Access Memory. DRAM is an abbreviation for Dynamic Random Access Memory.

The auxiliary storage device 922 is a storage device that stores data. A specific example of the auxiliary storage device 922 is an HDD. Alternatively, the auxiliary storage device 922 may be a portable storage medium such as an SD (registered trademark) memory card, CF, a NAND flash, a flexible disk, an optical disc, a compact disc, a Blu-ray (registered trademark) disc, or a DVD. HDD is an abbreviation for Hard Disk Drive. SD (registered trademark) is an abbreviation for Secure Digital. CF is an abbreviation for CompactFlash (registered trademark). DVD is an abbreviation for Digital Versatile Disk.

The input interface 930 is a port to be connected with an input device such as a mouse, a keyboard, or a touch panel. Specifically, the input interface 930 is a USB terminal. The input interface 930 may be a port to be connected with an LAN. USB is an abbreviation for Universal Serial Bus. LAN is an abbreviation for Local Area Network.

The output interface 940 is a port to which a cable of an output device such as a display is connected. Specifically, the output interface 940 is a USB terminal or an HDMI (registered trademark) terminal. Specifically, the display is an LCD. The output interface 940 is also referred to as a display interface. HDMI (registered trademark) is an abbreviation for High Definition Multimedia Interface. LCD is an abbreviation for Liquid Crystal Display.

The communication device 950 has a receiver and a transmitter. The communication device 950 is connected to a communication network such as a LAN, the Internet, or a telephone line. Specifically, the communication device 950 is a communication chip or an NIC. NIC is an abbreviation for Network Interface Card.

The abnormality detection program is executed in the abnormality detection apparatus 100. The abnormality detection program is read into the processor 910 and executed by the processor 910. The memory 921 stores not only the abnormality detection program, but also an OS. OS is an abbreviation for Operating System. The processor 910 executes the abnormality detection program while executing the OS. The abnormality detection program and the OS may be stored in the auxiliary storage device 922. The abnormality detection program and the OS stored in the auxiliary storage device 922 are loaded into the memory 921 and executed by the processor 910. Part or the entirety of the abnormality detection program may be embedded in the OS.

The abnormality detection apparatus 100 may include a plurality of processors as an alternative to the processor 910. The plurality of processors share execution of the abnormality detection program. Each of these processors is, like the processor 910, a device that executes the abnormality detection program.

Data, information, signal values, and variable values that are used, processed, or output by the abnormality detection program are stored in the memory 921 or the auxiliary storage device 922, or stored in a register or a cache memory in the processor 910.

"Unit" of each of the model generation unit 110, the reliability calculation unit 120, and the abnormality diagnosis unit 130 may be interpreted as "circuit", "step", "procedure", "process", or "circuitry". The abnormality detection program causes a computer to execute a model generation process, a reliability calculation process, and an abnormality diagnosis process. "Process" of each of the model generation process, the reliability calculation process, and the abnormality diagnosis process may be interpreted as "program", "program product", "computer readable storage medium storing a program", or "computer readable recording medium recording a program". Further, an abnormality detection method is a method performed by execution of the abnormality detection program by the abnormality detection apparatus 100.

The abnormality detection program may be stored and provided in a computer readable recording medium. Alternatively, the abnormality detection program may be provided as a program product.

*** Description of Function ***

Next, an overview of individual functional elements of the abnormality detection apparatus 100 according to the present embodiment will be described.

A sensor signal is data obtained from a sensor attached to the facility. A control signal is data indicating a command value for controlling the facility. Further, an event signal is data indicating a combination of an event such as start/suspend output by the facility or occurrence of an alert, and its occurrence time.

The abnormality detection apparatus 100 according to the present embodiment determines an abnormality of the facility according to multidimensional time series data by a sensor signal obtained from the facility having various modes, as input. Further, the abnormality detection apparatus 100 calculates for an abnormality detection result of the facility, the reliability of the abnormality detection result of the facility based on time series data of a control signal related to facility control to realize the various modes.

The model generation unit 110 extracts a feature amount from data of a control signal, and generates the control signal model 144 which is a model for calculating an abnormality degree.

The reliability calculation unit 120 calculates the reliability of an abnormality detection result in a specific period from time series data of a control signal based on the control signal model 144.

The abnormality diagnosis unit 130 generates for the abnormality detection result of a sensor signal in the specific period, an output content to a user based on the reliability of the abnormality detection result.

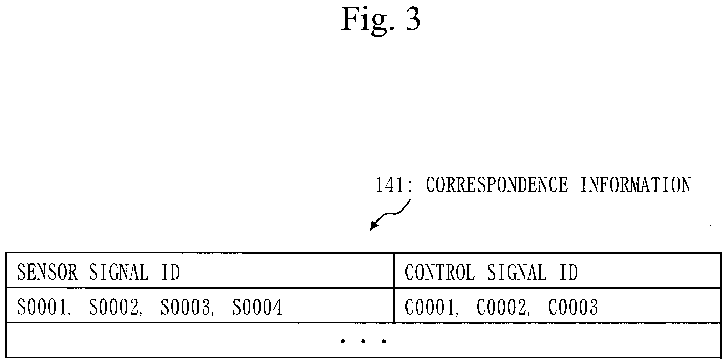

Fig. 3 is a diagram illustrating a configuration example of the correspondence information 141 according to the present embodiment.

The correspondence information 141 is data indicating a correspondence between a sensor signal and a control signal. In the correspondence information 141, a sensor signal and a control signal that affects the sensor signal are corresponded to each other. The correspondence information 141 is used to select a control signal corresponding to a sensor signal in the abnormality diagnosis unit 130, for example.

The correspondence information 141 may be any data as long as the correspondence information 141 includes a combination of one or more sensor signal IDs and one or more control signal IDs.

The example in Fig. 3 illustrates that there is a correspondence between a sensor signal S0001, a sensor signal S0002, a sensor signal S0003, and a sensor signal S0004 and a control signal C0001, a control signal C0002, and a control signal C0003.

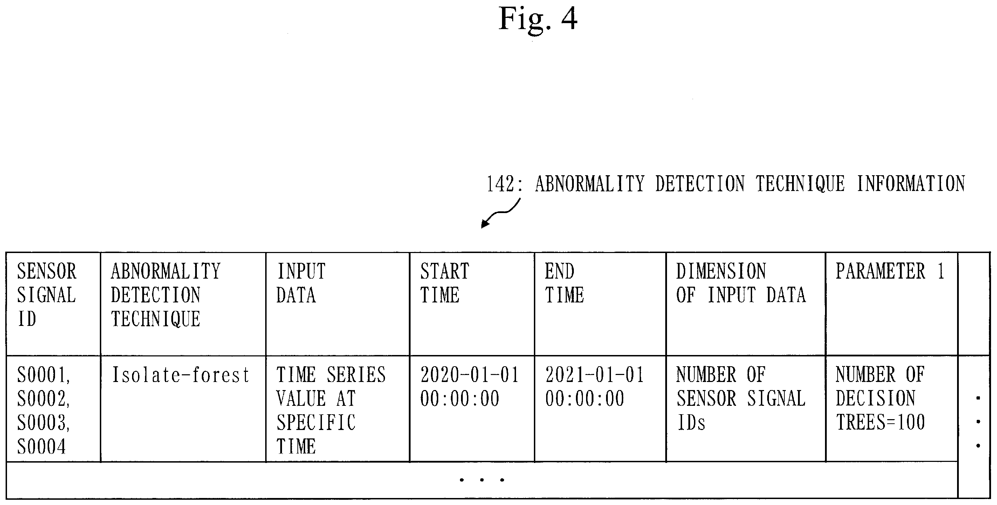

Fig. 4 is a diagram illustrating a functional example of the abnormality detection technique information 142 according to the present embodiment.

The abnormality detection technique information 142 is data indicating a technique of detecting an abnormality in a sensor signal.

The abnormality detection technique information 142 may be any data as long as the abnormality detection technique information 142 includes one or more sensor signals, an abnormality detection technique, input data, a dimension of the input data, a start time, an end time, and a parameter of the abnormality detection technique.

The example in Fig. 4 illustrates that abnormality detection is performed using isolate-forest on the sensor signals which are the sensor signals S0001, S0002, S0003, and S0004. Further, a time series value at a specific time is used as the input data to the abnormality detection technique. Further, the dimension of the input data is set to the number of IDs of sensor signals. In the example in Fig. 4, the dimension of the input data is four. Further, the number of decision trees which is one of the parameters of isolate-forest is 100.

The start time is the start time of the time series value and the end time is the end time of the time series value.

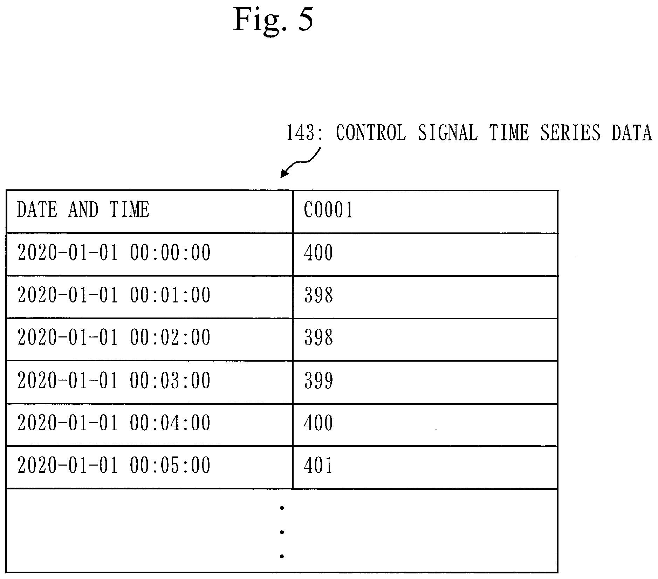

Fig. 5 is a diagram illustrating a configuration example of the control signal time series data 143 according to the present embodiment.

The control signal time series data 143 is time series data of a control signal.

The control signal time series data 143 includes data for uniquely specifying the control signal, a time at which data has been measured from the facility, and a command value measured at each time. The measured times need to be at equal intervals, except for a deficiency due to a malfunction or the like.

The example in Fig. 5 illustrates data that records command values for the temperature of a boiler in units of one minute, for the boiler in a power generation plant. In the example, one piece of time series data is written in which the data for uniquely specifying the control signal is C0001, but a plurality of control signals may be stored.

The control signal model 144 is a model for calculating an abnormality degree of a control signal. The control signal model 144 is generated by the model generation unit 110 by applying to the control signal time series data 143, the same abnormality detection technique as the abnormality detection technique used for abnormality detection of a sensor signal.

The control signal model 144 may be any data as long as the control signal model 144 includes information that can uniquely specify a model stored for each control signal.

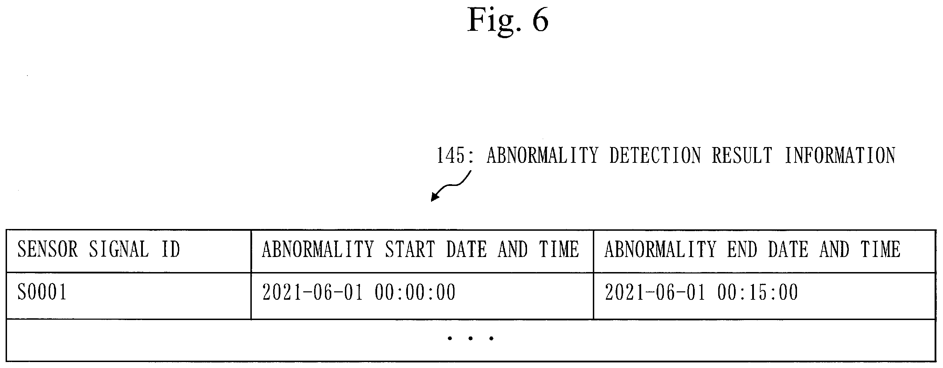

Fig. 6 is a diagram illustrating a functional example of the abnormality detection result information 145 according to the present embodiment.

The abnormality detection result information 145 stores an abnormality detection result for a specific period of a sensor signal.

Data stored in the abnormality detection result information 145 may be any data as long as the abnormality detection result information 145 includes data that uniquely specifies the sensor signal, a start time of determining an abnormality, and an end time of determining the abnormality.

The example in Fig. 6 illustrates that the abnormality has occurred during the period from "2021-06-01 00:00:00" to "2021-06-01 00:15:00" of the sensor signal S0001.

The abnormality diagnosis result 146 is generated by the abnormality diagnosis unit 130 and presented to the user. The abnormality diagnosis result 146 will be described below.

*** Description of Operation ***

Next, operation of the abnormality detection apparatus 100 according to the present embodiment will be described. An operation procedure of the abnormality detection apparatus 100 is equivalent to the abnormality detection method. Further, a program that implements the operation of the abnormality detection apparatus 100 is equivalent to the abnormality detection program.

<Model Generation Process>

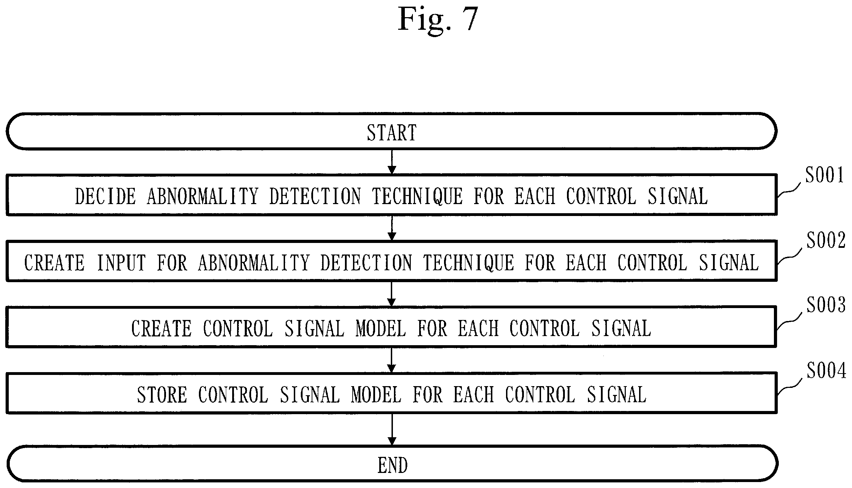

Fig. 7 is a flow diagram illustrating operation of the model generation unit 110 according to the present embodiment.

The model generation unit 110 extracts a feature amount of the control signal time series data 143 which is time series data of a control signal, and generates the control signal model 144 which is a model for calculating an abnormality degree for each control signal based on the feature amount.

An overview of the model generation process will be described below.

The model generation unit 110 uses time series data of a past control signal as training data, and generates the control signal model 144 that outputs the abnormality degree of the control signal from the time series data of the control signal based on the training data.

The model generation unit 110 decides the abnormality detection technique to be applied to the control signal set in the correspondence information 141 based on the correspondence information 141, the abnormality detection technique information 142, and the control signal time series data 143. Then, the model generation unit 110 generates the training data to be input to the abnormality detection technique by replacing a data format of a sensor signal to be input to the abnormality detection technique with a data format of the control signal included in the time series data of the past control signal. The model generation unit 110 generates the control signal model 144 by inputting the generated training data to the abnormality detection technique.

Here, the correspondence information 141 is information in which a sensor signal and a control signal that affects the sensor signal are corresponded to each other. The abnormality detection technique information 142 is information in which a sensor signal, an abnormality detection technique to be applied to the sensor signal, and a data format of the sensor signal to be input to the abnormality detection technique are set. The control signal time series data 143 is time series data of a past control signal.

Specifically, the details are as follows.

In step S001, the model generation unit 110 decides from the control signal time series data 143, the abnormality detection technique to be used to generate the control signal model 144. To decide the abnormality detection technique, data of the sensor signal ID and the control signal ID described in the correspondence information 141 and data of the sensor signal ID, the input data, and the dimension of the input data described in the abnormality detection technique information 142 are used.

Specifically, the model generation unit 110 combines, that is, links, the data of the correspondence information 141 and the data of the abnormality detection technique information 142 with the sensor signal ID. Thereby, the model generation unit 110 decides the abnormality detection technique linked to the control signal ID of the control signal time series data 143.

The model generation unit 110 decides the abnormality detection technique for all combinations of control signals included in the correspondence information 141. The combination of control signals may include one control signal.

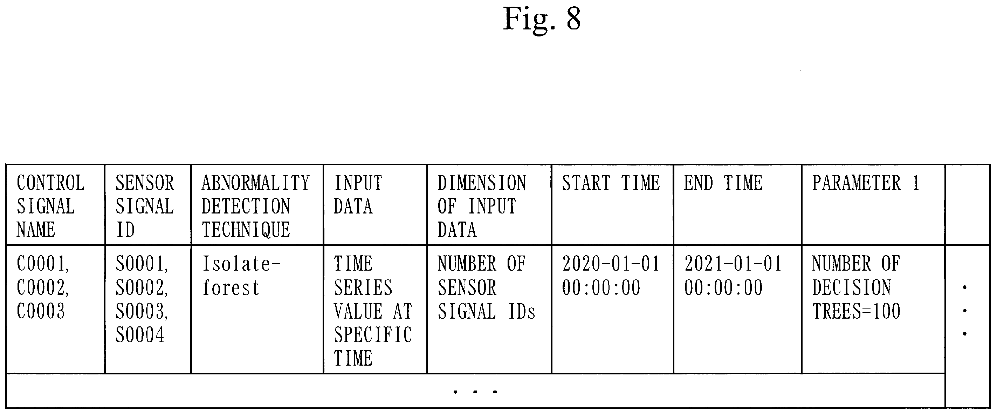

Fig. 8 is a diagram illustrating a state in which the correspondence information 141 of Fig. 3 and the abnormality detection technique information 142 of Fig. 4 according to the present embodiment are combined.

According to Fig. 8, Isolate-forest is applied to the control signals C0001, C0002 and C0003, as the abnormality detection technique.

In the correspondence information 141 of Fig. 3, a combination of sensor signals S0001, S0002, S0003, and S0004 is corresponded to a combination of control signals C0001, C0002, and C0003. Further, in the abnormality detection technique information 142 of Fig. 4, the same abnormality detection technique corresponds to the sensor signals S0001, S0002, S0003, and S0004. Since the same abnormality detection technique corresponds to the sensor signals S0001, S0002, S0003, and S0004 in the abnormality detection technique information 142 of Fig. 4, one abnormality detection technique is decided for the combination of control signals C0001, C0002, and C0003.

On the other hand, for example, when each of the sensor signals S0001 and S0002 corresponds to a different abnormality detection technique, processing is performed as follows.

To simplify the description, only the sensor signals S0001 and S0002 will be focused on and described.

A different abnormality detection technique may correspond to each of the sensor signals S0001 and S0002, for example. Specifically, if the abnormality detection technique information 142 includes information on "sensor signals S0001, S0002", "sensor signal S0001", and "sensor signal S0002", a different abnormality detection technique is set for each, that is, three abnormality detection techniques are set.

In such a case, all techniques are applied according to the correspondence information 141. For example, when the correspondence information 141 includes three combinations which are "sensor signals S0001, S0002 and control signal C0001", "sensor signal S0001 and control signal C0001", and "sensor signal S0002 and control signal C0001", the details are as follows. The three abnormality detection techniques selected for each combination of sensor signals are applied to the control signal C0001.

In step S002, the model generation unit 110 generates input data from the control signal time series data 143 based on the data generated in step S001 in order to generate input to the abnormality detection technique.

In the example in Fig. 8, since the time series value at the specific time is used as input, three-dimensional vectors in which the data of the control signals C0001, C0002 and C0003 at each time are combined, are generated for the number of times of minutes.

In the example in Fig. 8, since the dimension of the input data is the number of sensor signal IDs, the dimension of the input data is read as the number of control signal IDs. Therefore, the input data is a vector set of time series values at the same time in a combination of control signals. The number of vectors included in the set of the input data is defined as follows based on the start time and the end time.

Number of vectors included in a set of input data = (end time - start time) / unit of acquisition of data for time series values

Here, the unit of acquisition of data for time series values is, specifically, a unit such as one minute, two minutes, or three minutes.

In the input data in Fig. 8, if a control signal i is Ci, a time series value of the control signal i at time t is $Ci[t]$, the start time is start, the end time is end, and the vector is <>, the input data is as follows.
<CC0001[start], CC0002[start], CC0003[start]>, <CC0001[start+1], CC0002[start+1], CC0003[start+1]>, ..., <CC0001[end], CC0002[end], CC0003[end]>

In step S003, the model generation unit 110 generates the control signal model 144 by inputting the input data generated in step S002 to the abnormality detection technique decided in step S001.

For example, when the data generated in step S001 is the information of Fig. 8, the model generation unit 110 uses Isolate-forest as the abnormality detection technique. The model generation unit 110 sets the number of decision trees which is one of the parameters of Isolate-forest to 100, and generates 100 pieces of decision trees and an abnormality threshold value. The input data used to generate the decision trees is the data generated in step S002.

In such a manner, the control signal model 144 is generated for each control signal, which is composed of the 100 pieces of decision trees and the abnormality threshold value.

In step S004, the model generation unit 110 stores the control signal model 144 in the memory unit 140.

<Reliability Calculation Process>

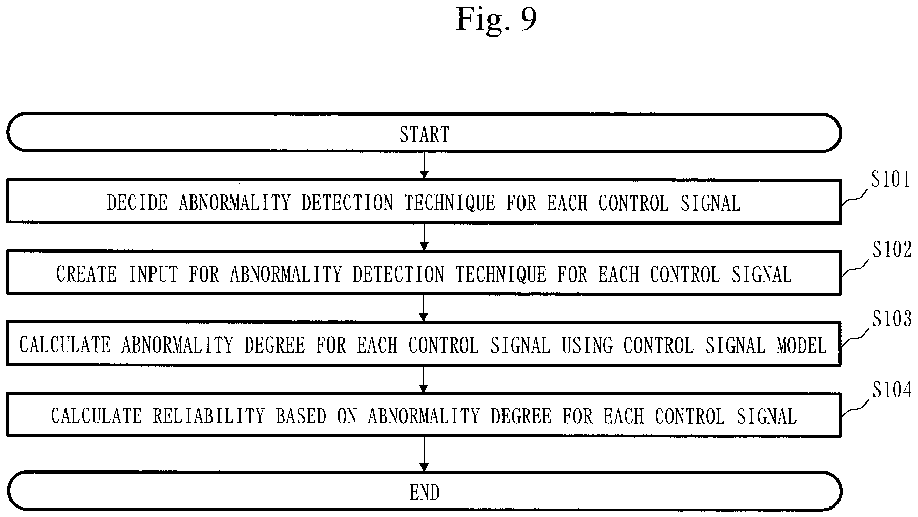

Fig. 9 is a flow diagram illustrating operation of the reliability calculation unit 120 according to the present embodiment.

The reliability calculation unit 120 calculates for an abnormality detection result output by the abnormality detection technique in a specific period, the reliability indicating whether or not the training data for each mode is sufficient to obtain the abnormality detection result.

An overview of the reliability calculation process will be described below.

The reliability calculation unit 120 inputs to the control signal model 144, time series data of a control signal in a specific time range of an abnormality detection result detected by a sensor signal, as verification data. The reliability calculation unit 120 obtains the abnormality degree of the control signal in the specific time range by inputting the verification data to the control signal model 144, and calculates the reliability of the control signal in the specific time range based on the abnormality degree.

The reliability calculation unit 120 generates the verification data from the control signal time series data 143 in the specific time range of the abnormality detection result, based on the correspondence information 141, the abnormality detection technique information 142, the control signal model 144, and the control signal time series data 143 in the specific time range of the abnormality detection result.

Specifically, the details are as follows.

In step S101, the reliability calculation unit 120 combines data on the sensor signal ID and the control signal ID described in the correspondence information 141, and data on the sensor signal ID, the input data, the dimension of the input data, the start time, and the end time described in the abnormality detection technique information 142, with the sensor signal ID.

In step S102, the reliability calculation unit 120 generates from the control signal time series data 143, input data for each control signal based on the data generated in step S101 in order to generate input of the abnormality detection technique. The present procedure is the same as step S002.

In the reliability calculation process, the start time and the end time are read as "abnormality end date and time" from "abnormality start date and time" in the abnormality detection result information 145 in Fig. 6. In the reliability calculation process, the specific time range is from the "abnormality start date and time" to the "abnormality end date and time". In the example in Fig. 6, the number of vectors included in a set of input data is defined as follows based on the abnormality start time and the abnormality end time.

Number of vectors included in a set of input data = (abnormality end time - abnormality start time) / unit of acquisition of data for time series values

The input data generated in the model generation process is training data for machine learning. On the other hand, the input data in the reliability calculation process is estimation data, that is, verification data. The data creation methods are the same. The only difference is a period of time series data.

In step S103, the reliability calculation unit 120 calculates the abnormality degree in the specific time range from the start time to the end time for each control signal, using the control signal model 144 and the input data generated in step S102. It is assumed that each control signal includes the meaning of each control signal set.

Control in the specific time range for each control signal is detailed control of each facility to realize a mode. That is, the abnormality degree in the specific time range for each control signal means the abnormality degree for each mode.

For example, when the abnormality detection technique is Isolate-forest, the reliability calculation unit 120 inputs the input data generated in step S102 to the decision tree stored in the control signal model 144, and an average of the results of all the decision trees is used as the abnormality degree in the specific time range for each control signal.

Here, a specific example of a relation between a control signal and a mode will be described in a power generation plant facility.

The mode refers to a state such as suspension, 80% power generation amount, or 100% power generation amount in the power generation plant. The control signal is time series data of a command value that indicate how each part of the plant needs to operate on the suspension. For example, when the power generation plant is suspended various valves are closed to stop the supply of fuel. At this time, the command value such as "close" is sent to the valves. The "suspension" in this example is the mode, and a numerical value that represents the operation of "close" to the valves is the control signal.

The specific time range in the reliability calculation process is a range in which an abnormality has been detected in the sensor signal described in the abnormality detection result information 145. The abnormality detection apparatus according to the present embodiment has a function of obtaining the reliability of determination of "abnormal or not" obtained from time series data of a sensor signal, using time series data of a control signal. Therefore, the specific time range is basically a period for the training data of the abnormality detection technique for the sensor signal and a period during which "abnormal" has been determined on the verification data. The specific time range in the reliability calculation process is a period during which the abnormality detection technique for the sensor signal has determined "abnormal" on the verification data.

In step S104, the reliability calculation unit 120 calculates the reliability for each specific time range for each control signal based on the abnormality degree obtained in step S103. As an example of a calculation method of the abnormality degree, if the abnormality degree is assumed to be amn, the threshold value for determining the abnormality degree as abnormal is assumed to be thr, the abnormality degree is calculated by the following formula. In the following formula, if the abnormality degree is smaller than the abnormality threshold value, the reliability is one or more, and if the abnormality degree is greater than the abnormality threshold value, the reliability is one or less.

$$\text{Reliability} = 1/ (\text{amn/thr})$$

Further, another example of a calculation method of the reliability accuracy may be defined as the following formula. In this case, if the abnormality degree is greater than the abnormality threshold value, the reliability is one or more, and if the abnormality degree is smaller than the abnormality threshold value, the reliability is one or less.

$$\text{Reliability} = \text{anm/thr}$$

<Abnormality Diagnosis Process>

The abnormality diagnosis unit 130 generates an abnormality diagnosis result from an abnormality detection result of a sensor signal stored in the abnormality detection result information 145 of the sensor signal and the reliability of abnormality diagnosis calculated by the reliability calculation unit 120, based on the correspondence information 141.

The abnormality diagnosis unit 130 outputs information obtained by adding the reliability of a control signal in a specific time range to the abnormality detection result in the specific time range, as an abnormality diagnosis result.

Specifically, the details are as follows.

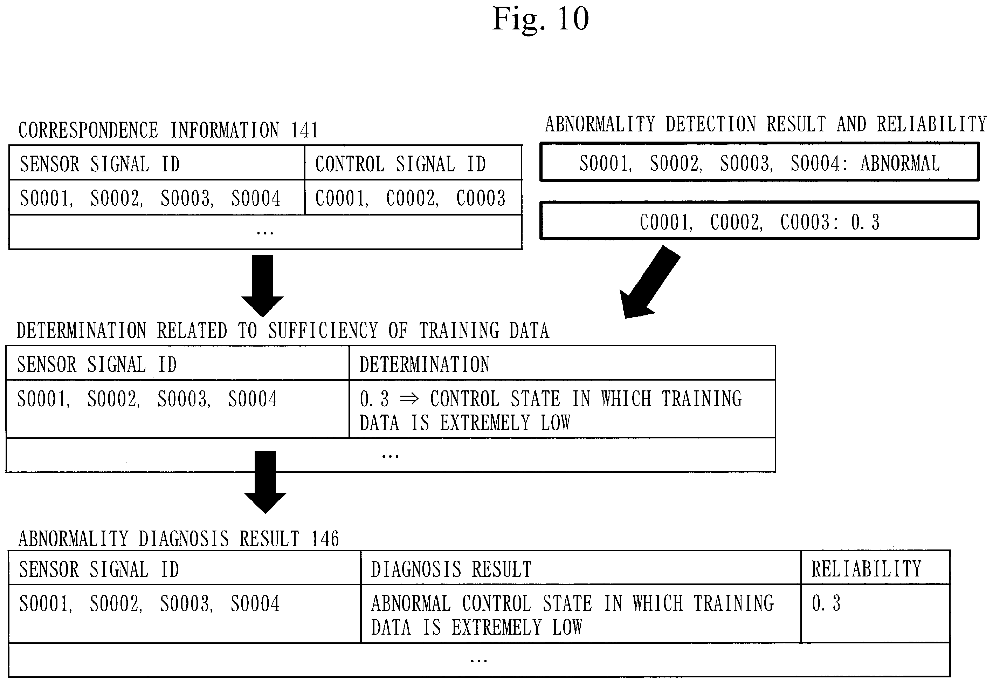

Fig. 10 is a diagram illustrating an example of obtaining the abnormality diagnosis result by the abnormality diagnosis unit 130 according to the present embodiment.

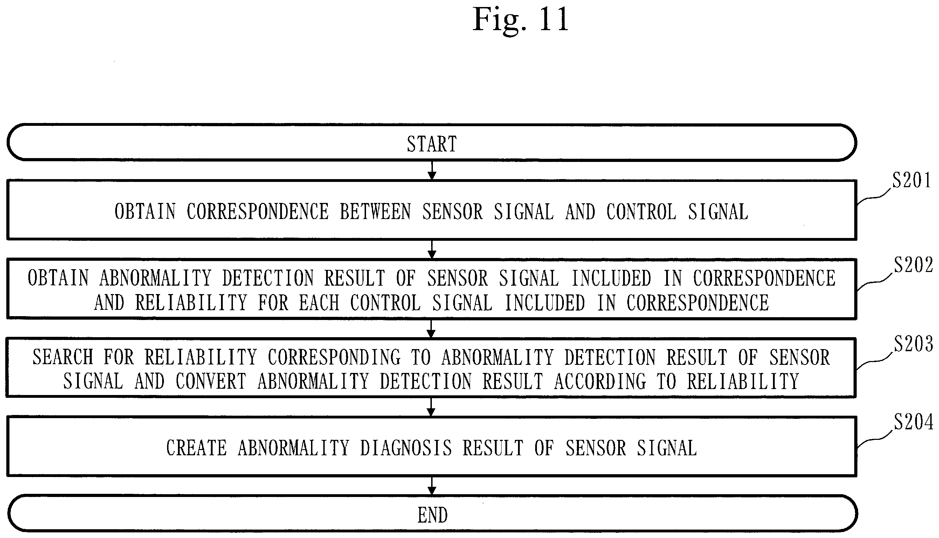

Fig. 11 is a flow diagram illustrating operation of the abnormality diagnosis unit 130 according to the present embodiment.

In Fig. 10, it is assumed that the abnormality detection result and the reliability represent results for the same period.

In step S201, the abnormality diagnosis unit 130 obtains from the correspondence information 141, a correspondence between the sensor signal and the control signal. In the example in Fig. 10, there are a combination of the sensor signals S0001, S0002, S0003, and S0004 and a combination of control signals C0001, C0002, and C0003.

In step S202, the abnormality diagnosis unit 130 obtains the abnormality detection result of the sensor signal from the abnormality detection result information 145 on the sensor signal based on the data obtained in step S201. Further, the abnormality diagnosis unit 130 obtains the reliability of the control signal from the reliability output by the reliability calculation unit 120. In the example in Fig. 10, the sensor signal is abnormal and the reliability of the control signal is 0.3.

In step S203, for the abnormality detection result of a certain sensor signal, it is determined how much its reliability is, from the correspondence between the sensor signal and the control signal, and the abnormality detection result of the sensor signal and the reliability of the control signal. If the reliability is one or less, the words "in a control state with extremely low training data" are added to the prefix of the abnormality detection result. Since the reliability is 0.3 in the example in Fig. 10, it is determined that it is necessary to add "in a control state with extremely low training data" to the prefix of the abnormality detection result.

In step S204, an abnormality diagnosis result that consists of a combination of each sensor signal, the abnormality detection result, and the reliability, using the result of step S203, is generated and output. The example in Fig. 10 indicates that the combination of the sensor signals S0001, S0002, S0003, and S0004 is detected as abnormal in the mode in which the training data is extremely low, and the reliability of the abnormality detection is 0.3.

*** Description of Effect of Present Embodiment ***

In the abnormality detection apparatus according to the present embodiment, the model generation unit extracts a feature amount of control signal time series data which is time series data of a control signal, and generates a control signal model which is a model for calculating an abnormality degree for each control signal based on the feature amount. Further, the reliability calculation unit calculates for a period of a detection result by one abnormality detection technique applied to a sensor signal obtained by the sensor, the reliability indicating whether past data is sufficient or not, by inputting the time series data of the control signal into the control signal model. Further, the abnormality diagnosis unit combines the reliability and the abnormality detection result of the one abnormality detection technique applied to the sensor signal based on the abnormality detection result information that stores the abnormality detection result for the sensor signal, and corrects the abnormality detection result of the one abnormality detection technique applied to the sensor signal by the reliability. Then, the abnormality diagnosis unit adds the reliability to the abnormality detection result, and outputs the abnormality detection result as an abnormality diagnosis result.

Further, in the abnormality detection apparatus according to the present embodiment, the model generation unit decides from correspondence information, a combination of control signals to be input to calculate the reliability for each abnormality detection technique based on the correspondence information, the abnormality detection technique information, and the control signal time series data. Then, the model generation unit generates the control signal model for the combination of control signals based on the abnormality detection technique. The correspondence information is information in which the control signal corresponds to the sensor signal affected by the control signal. The abnormality detection technique information is information that stores a combination of the abnormality detection technique of the facility and the sensor signal to be input to the abnormality detection technique.

Further, in the abnormality detection apparatus according to the present embodiment, the reliability calculation unit generates input data to be input to a control signal model based on correspondence information, abnormality detection technique information, the control signal model, and control signal time series data, and calculates the reliability by inputting the input data to the control signal model.

In such a manner, the abnormality detection apparatus according to the present disclosure applies to time series data of a control signal indicating a mode, the same technique as that of outlier detection used for abnormality detection on a sensor signal, and generates a control signal model for calculating the abnormality degree of the control signal. Therefore, according to the abnormality detection apparatus according to the present disclosure, the reliability of the abnormality detection result determined based on time series data of the sensor signal can be calculated from the abnormality degree of the control signal. Thereby, according to the abnormality detection apparatus according to the present disclosure, it is possible to immediately determine whether the time series data of the sensor signal being diagnosed by the abnormality detection apparatus is determined to be abnormal in a mode in which the data amount is sufficient, or is determined to be abnormal in a mode in which the data amount is extremely low.

In the abnormality detection apparatus according to the present embodiment, the reliability calculation unit determines from the abnormality degree of a control signal, whether a mode is rare or not, and calculates the reliability of an abnormality detection result of a sensor signal affected by control. To determine whether a mode is rare or not is to determine whether training data for "a certain mode" is extremely low or not. That is, it is to determine, among all pieces of training data that include a plurality of modes, whether training data for a certain mode is extremely low or absent.

Further, the abnormality detection apparatus according to the present embodiment, the abnormality diagnosis unit 130 corrects an abnormality diagnosis result of a sensor signal to be output to a person based on the reliability. Thereby, in abnormality detection on a device where control occurs, it is possible to detect whether or not the control has occurred in the past, and to reflect this in a result of the abnormality detection. Therefore, it is possible to immediately determine whether time series data of a sensor signal being diagnosed by the abnormality detection apparatus is determined to be abnormal in a mode in which the data amount is sufficient, or is determined to be abnormal in a mode in which the data amount is extremely low.

\*\*\* Other Configurations \*\*\*

<Modification 1>

In Modification 1 according to the present embodiment, a modification of the processing flows of the abnormality detection apparatus 100 described in Figs. 7, 9, and 11 will be described.

The processing of the abnormality detection apparatus 100 can be represented as two processing flows: a learning process to generate the control signal model 144; and an estimation process to obtain the abnormality degree from the control signal model 144.

The learning process to generate the control signal model 144 is equivalent to the model generation process described above.

The estimation to obtain the abnormality degree from the control signal model 144 is equivalent to the reliability calculation process described above.

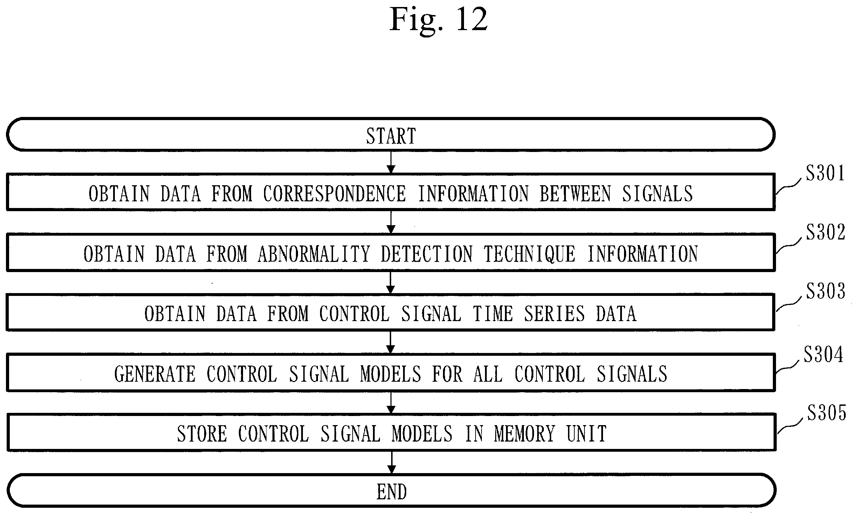

Fig. 12 is a flow diagram illustrating the learning process to generate the control signal model 144 during an abnormality detection process according to the present embodiment.

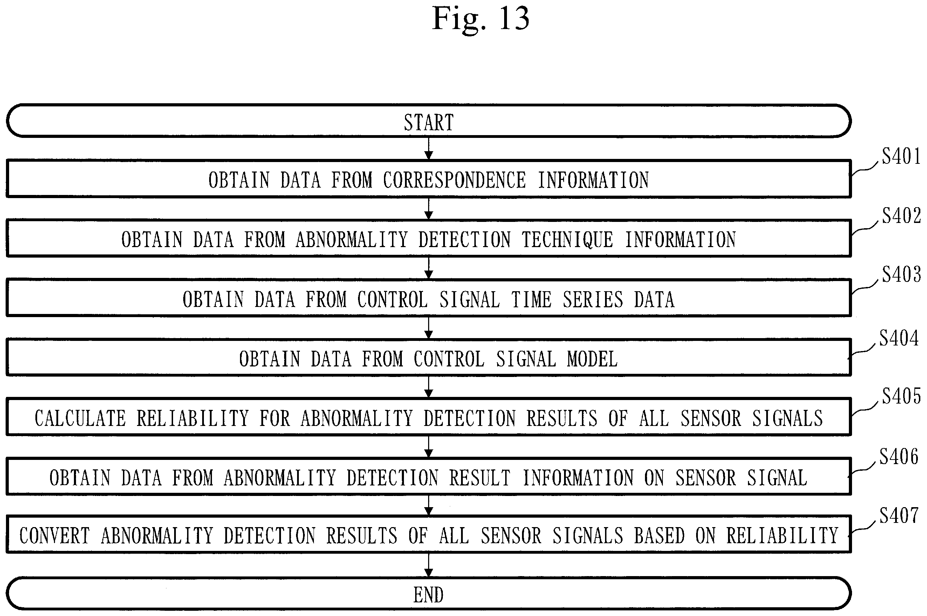

Fig. 13 is a flow diagram illustrating the estimation process to obtain the abnormality degree from the control signal model 144 during the abnormality detection process according to the present embodiment. Fig. 13 also includes the abnormality diagnosis process.

In the leaning flow illustrated in Fig. 12, the model generation unit 110, the correspondence information 141, the abnormality detection technique information 142, the control signal time series data 143, and the control signal model 144 are used.

In step S301, the model generation unit 110 obtains from the correspondence information 141, a relation between a combination of sensor signals and a combination of control signals.

In step S302, the model generation unit 110 obtains from the abnormality detection technique information 142, an abnormality detection technique applied to a specific sensor signal, information on input, and a parameter of the abnormality detection technique.

In step S303, the model generation unit 110 obtains from the control signal time series data 143, time series data of a control signal.

In step S304, the model generation unit 110 generates a model for each combination of control signals based on the data obtained in steps S301, S302 and S303. A flowchart for generation is the same as Fig. 7 described in the model generation unit 110.

In step S305, the model generation unit 110 stores all models obtained in step S304 in the memory unit 140, as the control signal models 144.

The process of Fig. 12 is equivalent to the process of Fig. 7.

In the estimation flow illustrated in Fig. 13, the reliability calculation unit 120, the correspondence information 141, the abnormality detection technique information 142, the control signal time series data 143, the control signal model 144, the abnormality detection result information 145, and the abnormality diagnosis result 146 are used.

In step S401, the reliability calculation unit 120 obtains from the correspondence information 141, a relation between a combination of sensor signals and a combination of control signals.

In step S402, the reliability calculation unit 120 obtains from the abnormality detection technique information 142, an abnormality detection technique applied to a specific sensor signal, information on input, and a parameter of the abnormality detection technique.

In step S403, the reliability calculation unit 120 obtains from the control signal time series data 143, time series data of a control signal.

In step S404, the reliability calculation unit 120 obtains from the control signal model 144, a model corresponding to the control signal.

In step S405, the reliability calculation unit 120 calculates the reliability for an abnormality detection result of a combination of sensor signals corresponding to a combination of control signals described in the correspondence information 141 based on the data obtained in steps S401, S402, S403 and S404. A flowchart for calculating the reliability is the same as that described in the reliability calculation process in Fig. 9.

In step S406, the abnormality diagnosis unit 130 obtains from the abnormality detection result information 145 on sensor signals, an abnormality detection result for each sensor signal.

In step S407, the abnormality diagnosis unit 130 converts the abnormality detection results of all sensor signals based on the information obtained in steps S401, S405 and S406, and generates the abnormality diagnosis result 146 that consists of a combination of the sensor signal, the abnormality diagnosis result and the reliability. A flowchart for generating the abnormality diagnosis result is the same as Fig. 11 described in the abnormality diagnosis unit 130.

The processing of Fig. 13 is equivalent to the processing of Figs. 9 and 11.

<Modification 2>

In the present embodiment, the functions of the model generation unit 110, the reliability calculation unit 120, and the abnormality diagnosis unit 130 are implemented by software. As a modification, the functions of the model generation unit 110, the reliability calculation unit 120, and the abnormality diagnosis unit 130 may be implemented by hardware.

Specifically, the abnormality detection apparatus 100 includes an electronic circuit 909 as an alternative to the processor 910.

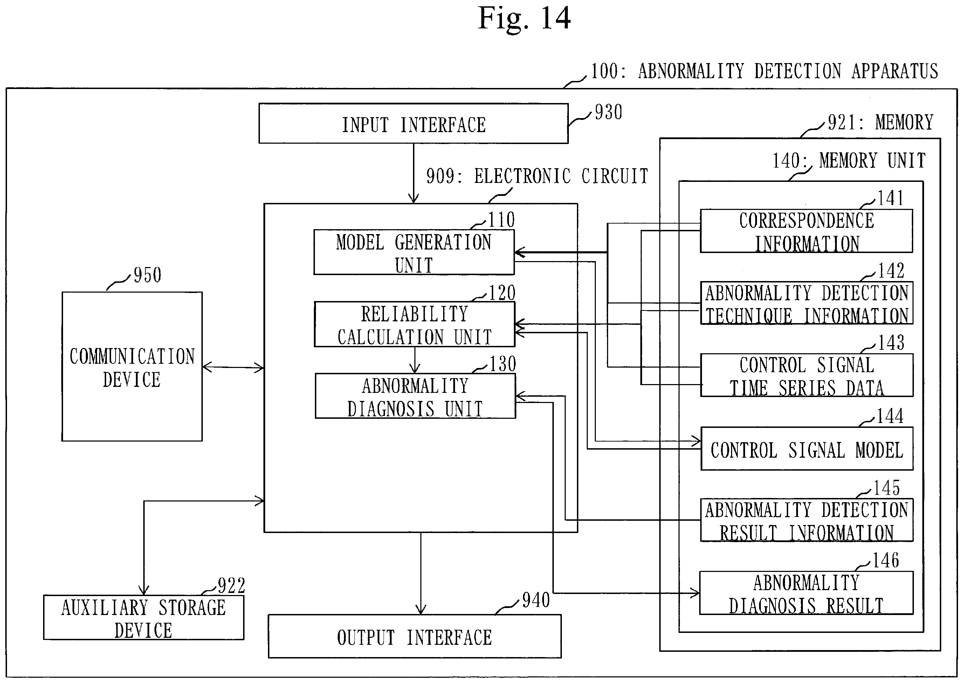

Fig. 14 is a diagram illustrating a functional example of the abnormality detection apparatus 100 according to Modification 2 of the present embodiment.

The electronic circuit 909 is a dedicated electronic circuit that implements the functions of the model generation unit 110, the reliability calculation unit 120, and the abnormality diagnosis unit 130. The electronic circuit 909 is, specifically, a single circuit, a composite circuit, a programmed processor, a parallel programming processor, a logic IC, a GA, an ASIC, or an FPGA. GA is an abbreviation for Gate Array. ASIC is an abbreviation for Application Specific Integrated Circuit. FPGA is an abbreviation for Field-Programmable Gate Array.

The functions of the model generation unit 110, the reliability calculation unit 120, and the abnormality diagnosis unit 130 may be implemented by one electronic circuit, or may be implemented by being distributed among a plurality of electronic circuits.

As another modification, a part of the functions of the model generation unit 110, the reliability calculation unit 120, and the abnormality diagnosis unit 130 may be implemented by the electronic circuit, and the remaining functions may be implemented by software. Alternatively, a part or all of the functions of the model generation unit 110, the reliability calculation unit 120, and the abnormality diagnosis unit 130 may be implemented by firmware.

Each of the processor and the electronic circuit is also referred to as processing circuitry. That is, the functions of the model generation unit 110, the reliability calculation unit 120, and the abnormality diagnosis unit 130 are implemented by the processing circuitry.

Embodiment 2.

In the present embodiment, points different from Embodiment 1 and points added to Embodiment 1 will be mainly described.

In the present embodiment, configurations having the same functions as those of Embodiment 1 are donated by the same reference signs, and the description thereof will be omitted.

In the present embodiment, a mode will be described in which an abnormality detection technique is for a single signal and one sensor signal is affected by a plurality of control signals.

*** Description of Configuration ***

In the present embodiment, the data formats of the correspondence information 141 and the abnormality detection technique information 142 are different from those of Embodiment 1.

Other configurations are the same as those configurations described in Figs. 1 and 2.

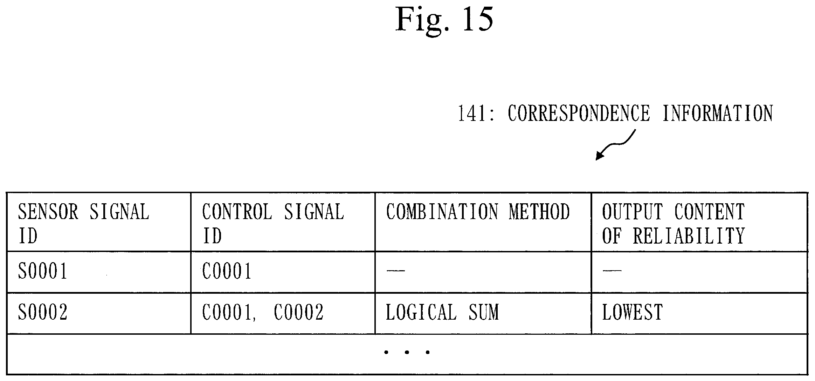

Fig. 15 is a diagram illustrating a configuration example of the correspondence information 141 according to the present embodiment.

Data stored in the correspondence information 141 may be any data as long as the correspondence information 141 includes a combination of one sensor signal ID, one or more control signal IDs, and a condition used for reliability calculation.

The example in Fig. 15 illustrates that there is a correspondence between the sensor signal S0001 and the control signal C0001, and between the sensor signal S0002 and the control signals C0001 and C0002. Further, for the sensor signal S0002 and the control signals C0001 and C0002, a combination method of reliability and an output content of reliability are stored as reliability determination of the abnormality detection result. The combination method is a logical sum and the output content of reliability is the lowest.

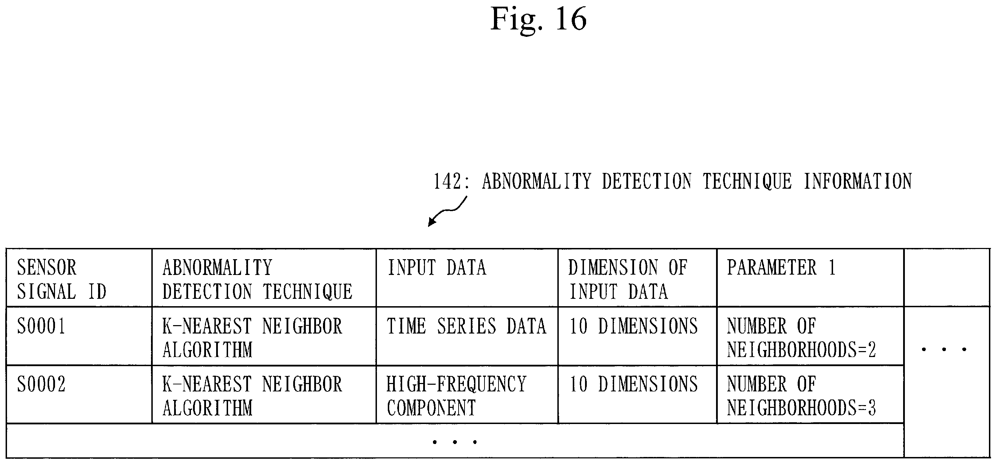

Fig. 16 is a diagram illustrating a configuration example of the abnormality detection technique information 142 according to the present embodiment.

Data stored in the abnormality detection technique information 142 is data that includes one sensor signal, an abnormality detection technique, input data, a dimension of the input data, a parameter of the abnormality detection technique. In the example in Fig. 16, abnormality detection is performed by the k-nearest neighbor algorithm for each of the sensor signals S0001 and S0002. Further, as for the input of the abnormality detection, the sensor signal S0001 is time series data, while the sensor signal S0002 is a high-frequency component. The number of dimensions of the input data for both of the sensor signals is 10. For the number of neighborhoods which is a parameter, the sensor signal S0001 is 2, and the sensor signal S0002 is 3.

In the abnormality detection technique information 142 in Fig. 16, the start time and the end time are omitted. However, the abnormality detection technique information 142 in Fig. 16 also includes information on the start time and the end time as in Embodiment 1.

*** Description of Operation ***

Next, the operation of the abnormality detection apparatus 100 according to the present embodiment will be described. An operation procedure of the abnormality detection apparatus 100 is equivalent to the abnormality detection method. Further, a program that implements the operation of the abnormality detection apparatus 100 is equivalent to the abnormality detection program.

In the present embodiment, one sensor signal corresponds to a combination of control signals, and a combination method of reliability for the combination of control signals is also set in the correspondence information 141. The model generation unit 110 generates the control signal model 144 by applying to each control signal of the combination of control signals, the abnormality detection technique corresponding to the sensor signal.

The reliability calculation unit 120 calculates the reliability of the combination of control signals, using the combination method of reliability.

Specifically, the details are as follows.

<Model Generation Process>

The model generation unit 110 generates the control signal model 144 for calculating the abnormality degree indicating a degree of abnormality from time series data of a control signal stored in the control signal time series data 143. Although a basic processing flow of the model generation unit 110 is the same as that in Fig. 7 described in Embodiment 1, differences from Embodiment 1 will be described below.

In step S001, the model generation unit 110 decides an abnormality detection technique to be used for generating a model of the control signal. For the decision, the sensor signal ID and the control signal ID described in the correspondence information 141, and the sensor signal ID, the input data, the data on the dimension of the input data described in the abnormality detection technique information 142 are used. Specifically, the model generation unit 110 combines the data in each storage area with the sensor signal ID, and decides the abnormality detection technique from the control signal ID of the combined data and the abnormality detection technique.

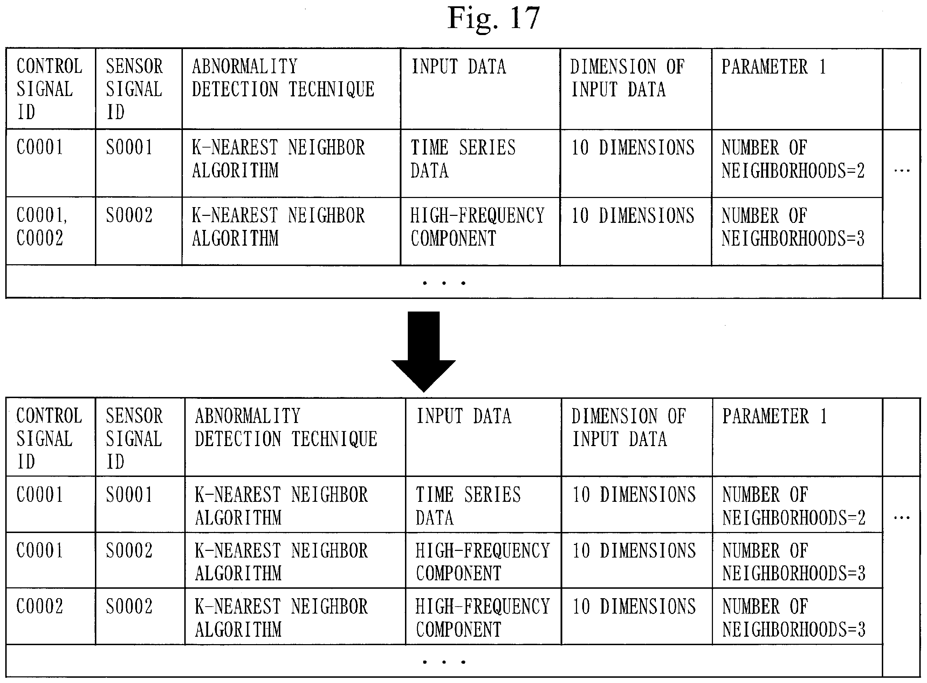

Fig. 17 is a diagram illustrating an example of a result of combining the correspondence information 141 and the abnormality detection technique information 142 according to the present embodiment.

According to Fig. 17, the abnormality detection technique of the sensor signal S0001 corresponds to the control signal C0001, and the abnormality detection technique of the sensor signal S0002 corresponds to the control signals C0001 and C0002. However, since the control signals C0001 and C0002 are abnormality detection for two signals, the control signals C0001 and C0002 are separated to be for one control signal. Therefore, for the control signal C0001, abnormality detection is performed using both of the abnormality detection technique performed for the sensor signal S0001 and the abnormality detection technique performed for the sensor signal S0002.

As described above, Fig. 17 also omits the start time and the end time.

In step S002, the model generation unit 110 extracts to generate input for the abnormality detection technique, input data from the data stored in the control signal time series data 143 based on information on the combined data in the previous stage. In the example in Fig. 17, the model generation unit 110 extracts 10-dimensional partial time series data for the control signal C0001, and extracts 10-dimensional high-frequency components for the control signals C0001 and C0002.

In step S003, the model generation unit 110 generates a model by inputting the data generated in step S002 to the abnormality detection technique. A parameter described in the data generated in step S001 is used as a parameter of the abnormality detection technique. An example will be described in which a model is generated for the signal with the control signal ID C0001 when the data generated in step S001 is the information in Fig. 17. The k-nearest neighbor algorithm is used as the abnormality detection technique. Further, for the signal with the control signal ID C0001, the input data that is the 10-dimensional time series data and that is the 10-dimensional high-frequency component is used. In the k-nearest neighbor algorithm where the input data is the time series data, the number of neighborhoods which is one of the parameters is set to 2, and in the k-nearest neighbor algorithm where the input data is the high-frequency component, the number of neighborhoods which is one of the parameters is set to 3. As a result, a model in which the input data is mapped onto a 10-dimensional space and an abnormality threshold value are generated.

In step S004, the model generation unit 110 stores the model generated in step S003 in the memory unit 140, as the control signal model 144.

<Reliability Calculation Process>

An operation flow of the reliability calculation unit 120 is the same as that of Embodiment 1. However, in step S101, when there are two or more control signals for one sensor signal as with step S001 of the model generation unit 110, the control signals are separated to be one control signal.

<Abnormality Diagnosis Process>

The abnormality diagnosis unit 130 generates an abnormality diagnosis result from the abnormality detection result information 145 of the sensor signal and the reliability of abnormality diagnosis calculated by the reliability calculation unit 120, based on the correspondence information 141.

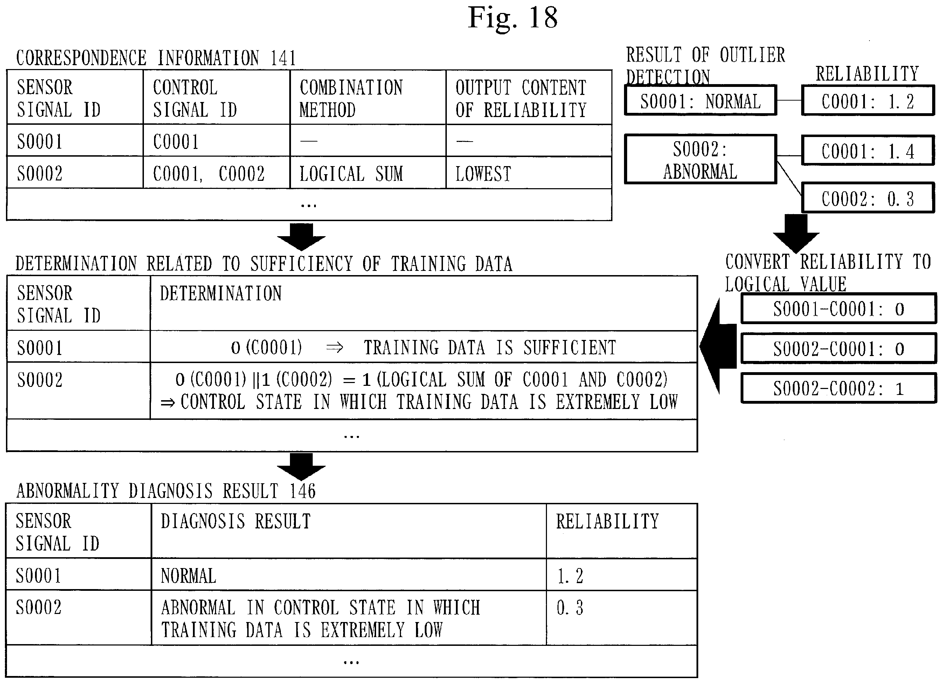

Fig. 18 is a diagram illustrating an example of how the abnormality diagnosis result is obtained by the abnormality diagnosis unit 130 according to the present embodiment.

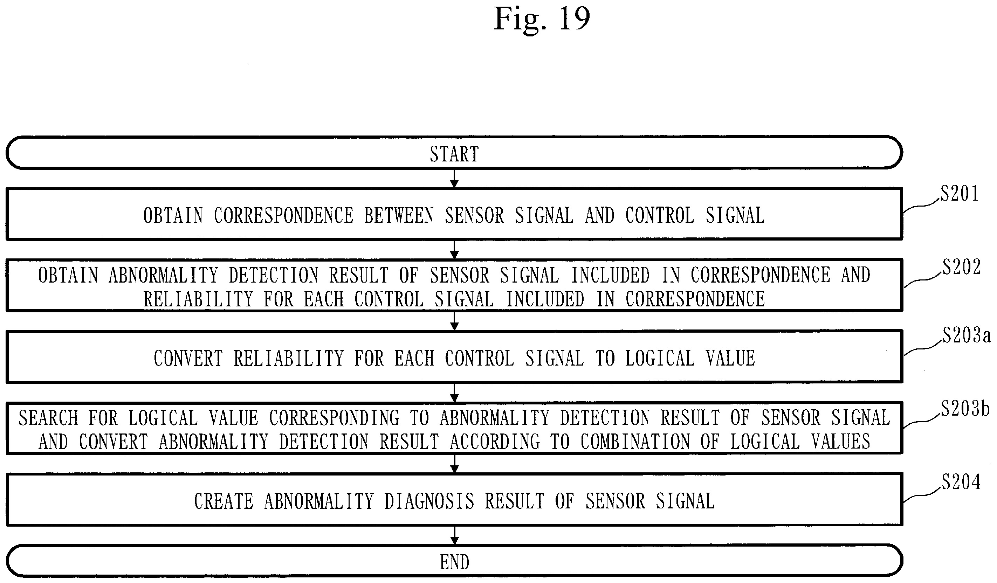

Fig. 19 is a flow diagram illustrating the operation of the abnormality diagnosis unit 130 according to the present embodiment.

In Fig. 18, it is assumed that the abnormality detection result and the reliability represent results for the same period.

In step S201, the abnormality diagnosis unit 130 obtains from the data stored in the correspondence information 141, a correspondence between the sensor signal and the control signal. In the example in Fig. 18, the sensor signal S0001 corresponds to the control signal C0001, and the sensor signal S0002 corresponds to the control signals C0001 and C0002.

The process of step S201 is the same as that of step S201 described in Fig. 11.

In step S202, the abnormality diagnosis unit 130 obtains from the abnormality detection result information 145 of the sensor signal, the abnormality detection result of the sensor signal, and obtains from the reliability output by the reliability calculation unit 120, the reliability of the control signal for each abnormality detection result of the sensor signal, based on the data obtained in step S201.

In the example in Fig. 18, the sensor signal S0001 is normal, the sensor signal S0002 is abnormal, the reliability of the control signal C0001 using the abnormality detection technique of the sensor signal S0001 is 1.2, the reliability of the control signal C0001 using the abnormality detection technique of the sensor signal S0002 is 1.4, and the reliability of the control signal C0002 using the abnormality detection technique of the sensor signal S0002 is 0.3.

The process of step S202 is the same as that of step S202 described in Fig. 11.

In step S203a, the abnormality diagnosis unit 130 converts the reliability of the control signal to a logical value. Here, if the reliability is one or more which is sufficient, the reliability is converted to 0, and if the reliability is one or less which is not sufficient, the reliability is converted to 1. In the example in Fig. 18, the logical value of the control signal C0001 using the abnormality detection technique of the sensor signal S0001 is 0, the logical value of the control signal C0001 using the abnormality detection technique of the sensor signal S0002 is 0, and the logical value of the control signal C0002 using the abnormality detection technique of the sensor signal S0002 is 1.

In step S203b, the abnormality diagnosis unit 130 determines from the correspondence between the sensor signal and the control signal, the abnormality detection result of the sensor signal, and the result of step S203a, whether or not the reliability of the abnormality detection result of a certain sensor signal is sufficient. Specifically, if the result determined by the combination method described in the correspondence between signals is 1 for the logical value of the reliability of the control signal corresponding to each sensor signal, the words "in control state with extremely little training data" are added to the prefix of the abnormality detection result. In the example in Fig. 18, the result of the sufficiency of the training data of the sensor signal S0001 is 0, and the result of the sufficiency of the training data of the sensor signal S0002 is 1. Therefore, it is determined that it is necessary to add "in control state with extremely little training data" to the prefix of the abnormality detection result of the sensor signal S0002.

The processes of steps S203a and S203b correspond to step S203 described in Fig. 11. The present embodiment differs from Embodiment 1 in that the reliability of the control signal is converted to a logical value.

In step S204, the abnormality diagnosis unit 130 generates an abnormality diagnosis result that consists of a combination of each sensor signal, the abnormality detection result, and the reliability, using the result of step S204, and outputs the abnormality diagnosis result. In the example in Fig. 18, the sensor signal S0001 is determined to be normal in the mode in which the training data is sufficient, and the sensor signal S0002 is determined to be abnormal in the mode in which the training data is extremely low. In terms of reliability, the sensor signal S0001 outputs the reliability of the control signal C0001 as it is. The sensor signal S0002 compares the control signal C0001 with the control signal C0002, and outputs the reliability of the control signal C0002, which is the lowest.

The process of step S204 is the same as that of step S204 described in Fig. 11.

The abnormality detection apparatus 100 has two flows: learning to generate a model; and estimation to obtain the abnormality degree. The learning and estimation flows are the same as those in Embodiment 1.

*** Description of Effects of Embodiment ***

In the abnormality detection apparatus according to the present embodiment, a combination method for a control signal and a sensor signal is added to existing data in correspondence information. Further, in the abnormality detection apparatus according to the present embodiment, when a restriction regarding the input of an abnormality detection technique is only one signal, and the sensor signal and control signals are one-to-many, a control signal model is generated for each control signal based on the abnormality detection technique.

Further, in the abnormality detection apparatus according to the present embodiment, the reliability calculation unit bundles the reliabilities obtained from the control signal models based on the combination method, and generates the reliability corresponding to an abnormality detection result. In such a manner, in the abnormality detection apparatus according to the present embodiment, even if the control signal corresponding to the specific sensor signal does not satisfy the restriction regarding the input of the abnormality detection technique, the sufficiency of the past data can be determined by bundling the models of control signals of the existing abnormality detection techniques.

According to the abnormality detection apparatus according to the present embodiment, even if an abnormality detection technique is for a single signal, and one sensor signal is affected by a plurality of control signals, the same effect as in Embodiment 1 can be obtained.

Embodiment 3.

In the present embodiment, differences from Embodiments 1 and 2 and points added to Embodiments 1 and 2 will be mainly described.

In the present embodiment, configurations having the same functions as those in Embodiments 1 and 2 are denoted by the same reference numerals, and the description thereof will be omitted.

In the present embodiment, a state will be described in which there is an imbalance between modes.

*** Description of Configuration ***

A hardware configuration of the present embodiment is the same as that in Fig. 1 described in Embodiment 1.

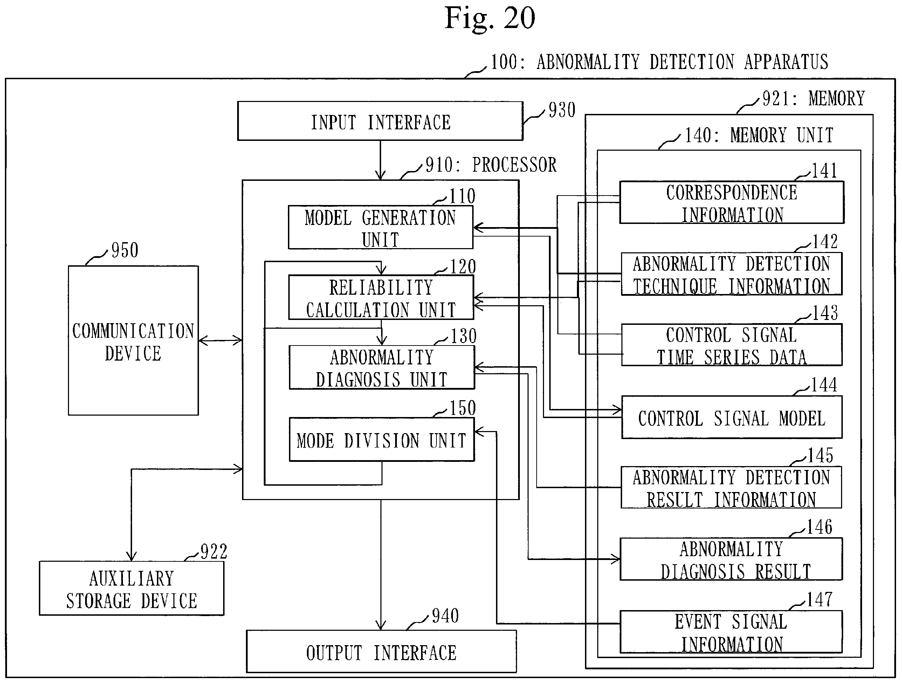

Fig. 20 is a diagram illustrating a functional configuration example of the abnormality detection apparatus 100 according to the present embodiment.

The abnormality detection apparatus 100 according to the present embodiment includes a mode division unit 150 in addition to the functional elements of Embodiment 1. The mode division unit 150 divides data depending on a control content.

Further, the abnormality detection apparatus 100 according to the present embodiment stores event signal information 147 in the memory unit 140, in addition to the configuration of Embodiment 1. The event signal information 147 stores log data of an event signal.

In the memory unit 140, the control signal model 144 stores a control signal model generated by the model generation unit 110. On the other hand, the correspondence information 141, the abnormality detection technique information 142, the control signal time series data 143, the abnormality detection result information 145 of a sensor signal, and the event signal information 147 need to store data corresponding to data before execution of the abnormality detection apparatus 100. Further, the correspondence information 141, the abnormality detection technique information 142, the control signal time series data 143, and the abnormality detection result information 145 of a sensor signal are the same as in Embodiment 1 or 2.

The control signal model 144 that stores a control signal model generated by the model generation unit 110 may be any data as long as the control signal model 144 includes a model and information that can uniquely specify a model stored by a control signal and a mode.

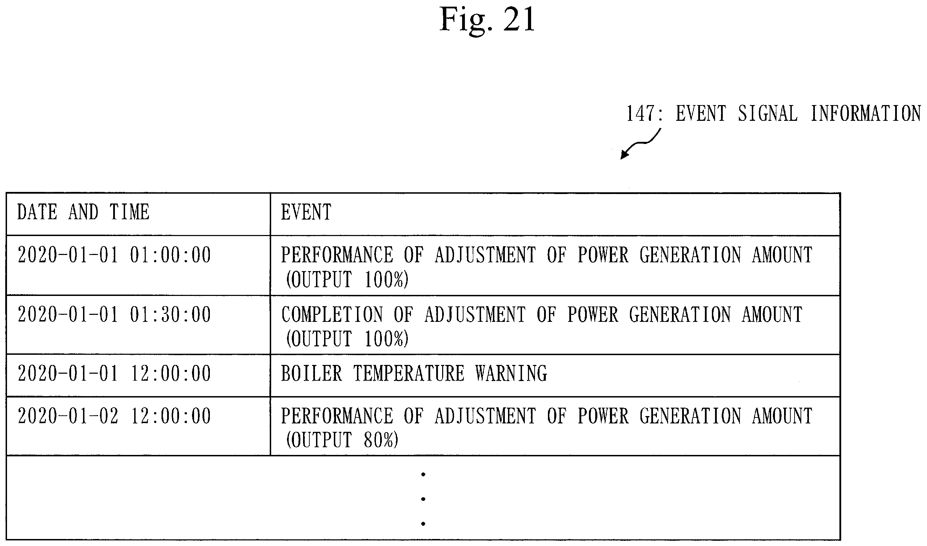

Fig. 21 is a diagram illustrating a functional example of the event signal information 147 according to the present embodiment.

Data stored in the event signal information 147 may be any data as long as the data includes a combination of a date and time when an event has occurred, in addition to event information such as a control content and a warning. Fig. 21 is an example of data stored for a power generation plant. The example in Fig. 21 illustrates that the adjustment of the power generation amount has started at 1:00 on January 1, 2020, the adjustment of the power generation amount has completed at 1:30 on January 1, 2020, the warning has been issued due to the boiler temperature at 12:00 on January 1, 2020, and the adjustment of the power generation amount has been restarted at 12:00 on January 2, 2020.

An event signal represents a command value in a larger unit than that of a control signal. For example, when a power generation plant is suspended, a log such as "suspend power generation plant" corresponds to. Therefore, the event signal is not time series data that is recorded at equal intervals (for example, one minute intervals), such as a control signal, but log data that is recorded irregularly. In such a manner, the control signal indicates "detailed control for each facility when power generation plant is suspended", and a mode indicates a high level of control such as "suspension of power generation plant".

*** Description of Operation ***

Next, the operation of the abnormality detection apparatus 100 according to the present embodiment will be described. An operation procedure of the abnormality detection apparatus 100 is equivalent to the abnormality detection method. Further, a program that implements the operation of the abnormality detection apparatus 100 is equivalent to the abnormality detection program.

In the present embodiment, the abnormality detection apparatus includes the mode division unit 150 that divides time series data of a control signal for each control state, based on event signal information that stores log data of an event signal that represents a control state or an alert of a facility.

The model generation unit 110 generates the control signal model 144 from the time series data of the control signal for each mode.

Specifically, the details are as follows.

The model generation process by the model generation unit 110 is the same as that in Embodiment 1 or 2.

The reliability calculation process by the reliability calculation unit 120 is the same as that in Embodiment 1 or 2.

The abnormality diagnosis process by the abnormality diagnosis unit 130 is the same as that in Embodiment 1 or 2.

<Mode Division Process>

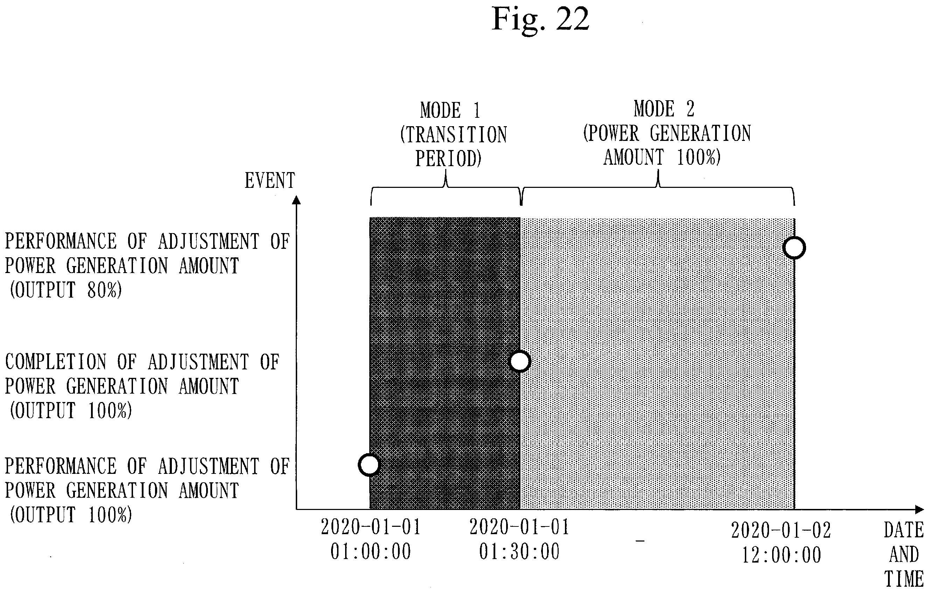

Fig. 22 is a diagram illustrating an example of mode division in a case where the event signal information 147 according to the preset embodiment is as in Fig. 21.

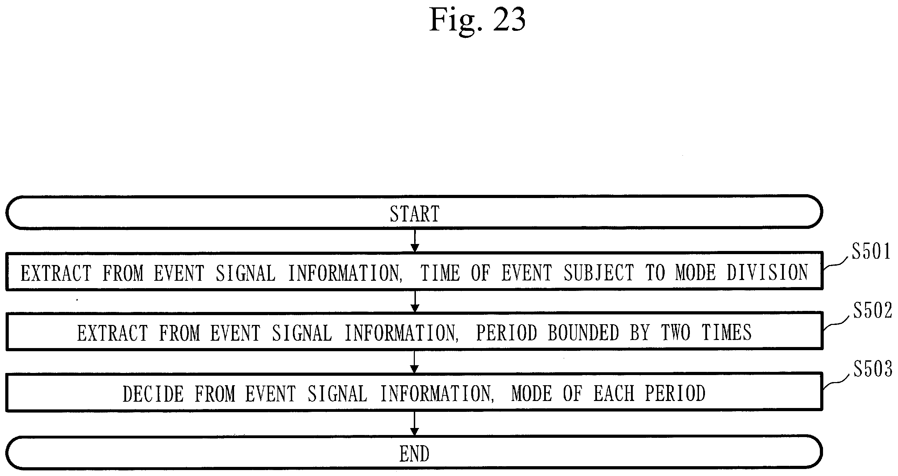

Fig. 23 is a flow diagram illustrating operation by the mode division unit 150 according to the present embodiment.

The mode division unit 150 divides data for each specific mode based on the data stored in the event signal information 147.

In step S501, the mode division unit 150 extracts from the data stored in the event signal information 147, only event information for specifying a mode. In the example in Fig. 21, since the warning is different from the information that specifies the mode, this is excluded. As a result, only the logs related to the adjustment of the power generation remain.

In step S502, the mode division unit 150 obtains a period during which a specific mode is present, using the event information and its time for specifying the mode extracted in step S501.

In the example in Fig. 22, the mode division unit 150 extracts a time from 1:00 on January 1, 2020 when the adjustment of the power generation amount has started until 1:30 on January 1, 2020 when the adjustment of the power generation amount has completed, and also a time from 1:30 on January 2, 2020 when the adjustment of the power generation amount has completed until 12:00 on January 2, 2020 when the adjustment of the power generation has started, as periods.

In step S503, the mode for each period is specified based on the event information at the start of each period. In Fig. 21, since the event information on the start date and time is the start of the adjustment of the power generation amount during the period from 1:00 on January 1, 2020 to 1:30 on January 1, 2020, the period corresponds to a transition period during which the adjustment of the power generation amount is performed. Similarly, the period from 1:30 on January 1, 2020 to 12:00 on January 2, 2020 corresponds to the period during which the adjustment of the power generation amount is completed and the power generation amount is operated at 100%.

The abnormality detection apparatus 100 has two flows: learning to generate the control signal model 144; and estimation to obtain the abnormality degree from the control signal model 144.

The learning to generate the control signal model 144 is equivalent to the model generation process described above.

The estimation to obtain the abnormality degree from the control signal model 144 is equivalent to the reliability calculation process described above.

A mode division process according to the present embodiment is performed before each process of the model generation process and the reliability calculation process.

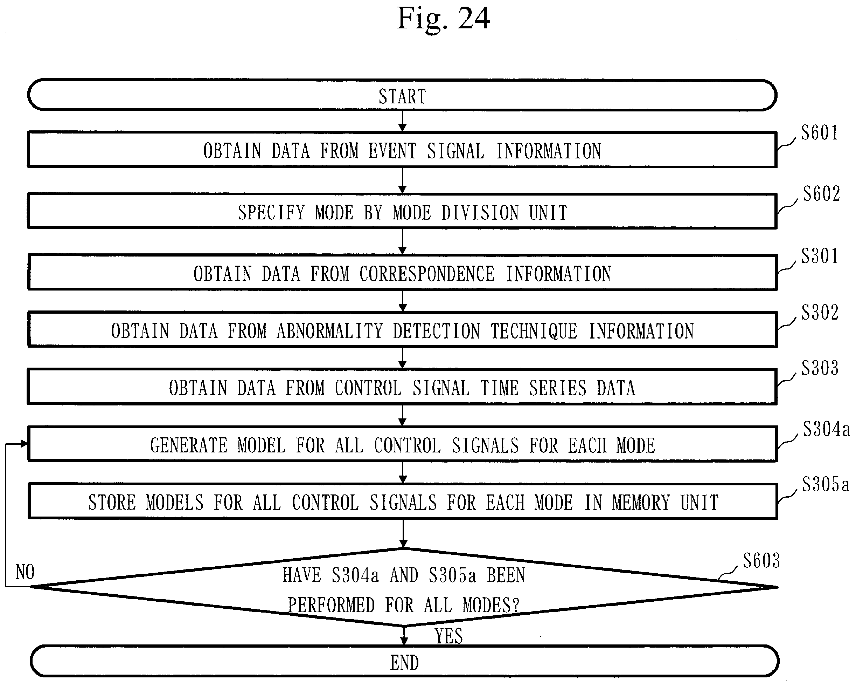

Fig. 24 is a flow diagram illustrating processing during the learning to generate the control signal model 144 according to the present embodiment.

In step S601, the mode division unit 150 obtains data from the event signal information 147.

In step S602, the mode division unit 150 performs mode division based on the data obtained in step S601. The mode division process is the same as that in Fig. 23.

In step S301, the model generation unit 110 obtains from the correspondence information 141, a relation between a combination of sensor signals and a combination of control signals.

In step S302, the model generation unit 110 obtains from the abnormality detection technique information 142, an abnormality detection technique applied to a specific sensor signal, information on input, and a parameter of the abnormality detection technique.

In step S303, the model generation unit 110 obtains from the control signal time series data 143, time series data of a control signal.

Steps S301 to S303 are the same as those in Fig. 12.

Step S304a is equivalent to step S304 in Fig. 12, and step S305a is equivalent to step S305 in Fig. 12.

In step S304a, the model generation unit 110 generates a model of each control signal for each mode based on the data obtained in steps S602, S301, S302 and S303, as the control signal model 144.

In step S305a, the model generation unit 110 stores in the memory unit 140, the control signal model 144 for all control signals for each mode obtained in step S304a.

Steps S304a and S305a are repeatedly performed for all modes (step S603).

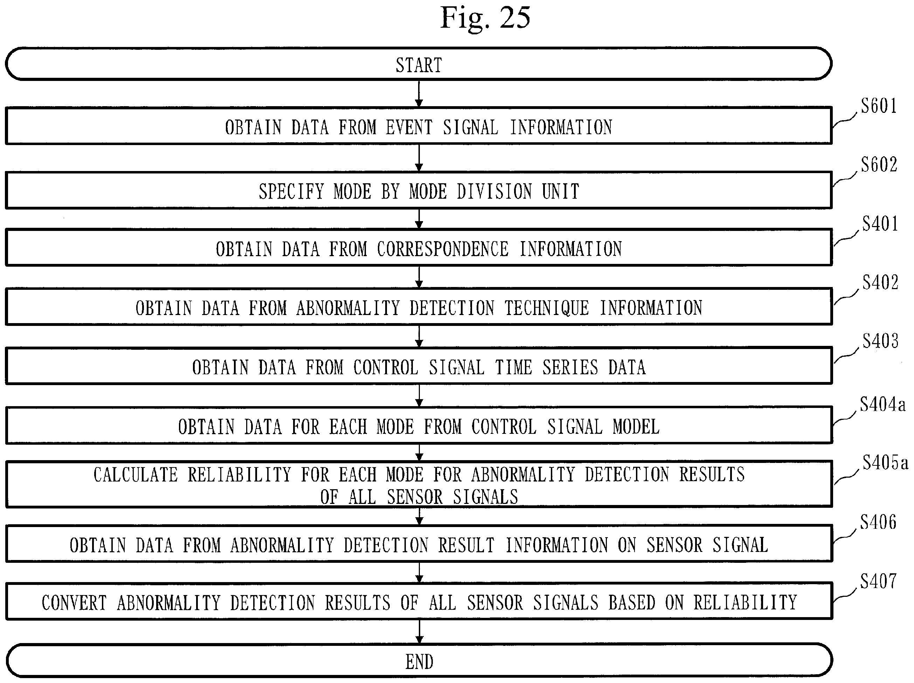

Fig. 25 is a flow diagram illustrating processing during the estimation to obtain the abnormality degree from the control signal model 144 according to the present embodiment.

Steps S601 and S602 are the same as steps S601 and S602 in Fig. 24.

In step S401, the reliability calculation unit 120 obtains from the correspondence information 141, a relation between a combination of sensor signals and a combination of control signals.

In step S402, the reliability calculation unit 120 obtains from the abnormality detection technique information 142, an abnormality detection technique applied to a specific sensor signal, information on input, and a parameter of the abnormality detection technique.

In step S403, the reliability calculation unit 120 obtains from the control signal time series data 143, time series data of a control signal.

Steps S401 to S403 are the same as those in Fig. 13.

Step S404a is equivalent to step S404 in Fig. 13, and step S405a is equivalent to step S405 in Fig. 13.

In step S404a, the reliability calculation unit 120 obtains from the control signal model 144, a model for each mode corresponding to a control signal.

In step S405a, the reliability calculation unit 120 calculates the reliability for each mode for abnormality detection results of all sensor signals based on the data obtained in steps S602, S401, S402, S402 and S404a.

Steps S406 and S407 are the same as steps S406 and S407 in Fig. 13.

*** Description of Effects of Embodiment ***

The abnormality detection apparatus according to the present embodiment includes a mode division unit that divides the control signal time series data by each control state based on event signal information that stores log data of an event signal that represents a control state or an alert of the facility. A model generation unit generates a model from the control signal for each mode.

According to the abnormality detection apparatus according to the present embodiment, even if there is an imbalance between modes, the same effects as those in Embodiments 1 and 2 can be obtained.

In the above Embodiments 1 to 3, each part of the abnormality detection apparatus has been described as an independent functional block. However, the configuration of the abnormality detection apparatus does not need to be as in the embodiments described above. The functional blocks of the abnormality detection apparatus may have any configuration as long as they can implement the functions described in the embodiments described above. Furthermore, the abnormality detection apparatus may not be a single apparatus, but may be a system configured with a plurality of devices.

For example, the abnormality detection apparatus may not include the model generation unit. The model generation unit may be installed in a server or another apparatus, and a control signal mode may be generated in the server or the other apparatus. Alternatively, the abnormality detection apparatus may use a control signal model prepared in advance.

Further, it is possible to combine a plurality of portions of Embodiments 1 to 3 and to implement them. Alternatively, it is possible to implement only one portion of these embodiments. In addition, it is possible to implement any combination of these embodiments, either as a whole or partially.

That is, in Embodiments 1 to 3, it is possible to freely combine the embodiments, or to modify any configuration element of each embodiment, or to omit any of the configuration elements in each embodiment.

The embodiments described above are essentially preferred examples, and are not intended to limit the scope of the present disclosure, the scope of application products of the present disclosure, and the scope of use of the present disclosure. The embodiments described above can be modified in various ways as appropriate. For example, the procedures described using flow diagrams or sequence diagrams may be modified as appropriate.

**Reference Signs List**

100: abnormality detection apparatus; 110: model generation unit; 120: reliability calculation unit; 130: abnormality diagnosis unit; 140: memory unit; 150: mode division unit; 141: correspondence information; 142: abnormality detection technique information; 143: control signal time series data; 144: control signal model; 145: abnormality detection result information; 146: abnormality diagnosis result; 147: event signal information; 909: electronic circuit; 910: processor; 921: memory; 922: auxiliary storage device; 930: input interface; 940: output interface; 950: communication device.

**Claims**

1. An abnormality detection apparatus that includes a sensor and detects an abnormality of a facility controlled by a control signal, the abnormality detection apparatus comprising:

   a reliability calculation unit to obtain an abnormality degree of a control signal in a specific time range by inputting to a control signal model which is a model that is generated based on training data which is a feature amount of time series data of a past control signal and outputs the abnormality degree for each control signal from the time series data of the control signal, the time series data of the control signal in the specific time range of an abnormality detection result detected in a sensor signal obtained from the sensor, as verification data, and to calculate the reliability of the control signal in the specific time range and;

   an abnormality diagnosis unit to output information in which the reliability of the control signal in the specific time range is added to the abnormality detection result in the specific time range, as an abnormality diagnosis result.

2. The abnormality detection apparatus according to claim 1 comprising
   a model generation unit to extract the feature amount of the time series data of the past control signal, as the training data, and to generate the control signal model based on the training data.

3. The abnormality detection apparatus according to claim 2, wherein
   the model generation unit decides an abnormality detection technique to be applied to each control signal set in correspondence information, based on the correspondence information in which the sensor signal and the control signal that affects the sensor signal are corresponded to each other, abnormality detection technique information in which the sensor signal, the abnormality detection technique to be applied to the sensor signal, and a data format of the sensor signal to be input to the abnormality detection technique are set, and the time series data of the control signal, generates the training data to be input to the abnormality detection technique by replacing the data format of the sensor signal to be input to the abnormality detection technique with a data format of the control signal, and generates the control signal model by inputting the training data to the abnormality detection technique.

4. The abnormality detection apparatus according to claim 3, wherein
   the reliability calculation unit generates from the time series data of the control signal, the verification data based on the correspondence information, the abnormality detection technique information, the control signal model, the time series data of the control signal, and the abnormality detection result in the specific time range, and obtains the abnormality degree of the control signal by inputting the verification data to the control signal model.

5. The abnormality detection apparatus according to claim 3 or 4, wherein

when one sensor signal and a combination of control signals are corresponded to each other and a commination method of the combination of control signals is also set in the correspondence information, the model generation unit generates the control signal model by applying to each of the combination of control signals, the abnormality detection technique corresponding to the sensor signal, and

the reliability calculation unit calculates the reliability of the combination of control signals, using the combination method of the combination of control signals.

6. The abnormality detection apparatus according to any one of claims 2 to 5 comprising

a mode division unit to divide the time series data of the control signal for each control state based on event signal information that stores log data of an event signal that represents a control state or an alert of the facility, wherein the model generation unit generates the control signal model from the time series data of the control signal for each mode.

7. An abnormality detection method used for an abnormality detection apparatus that includes a sensor and detects an abnormality of a facility controlled by a control signal, the abnormality detection method comprising:

by a computer, obtaining an abnormality degree of a control signal in a specific time range by inputting to a control signal model which is a model that is generated based on training data which is a feature amount of time series data of a past control signal and outputs the abnormality degree for each control signal from the time series data of the control signal, the time series data of the control signal in the specific time range of an abnormality detection result detected in a sensor signal obtained from the sensor, as verification data, and calculating the reliability of the control signal in the specific time range and;

by the computer, outputting information in which the reliability of the control signal in the specific time range is added to the abnormality detection result in the specific time range, as an abnormality diagnosis result.

8. An abnormality detection program used for an abnormality detection apparatus that includes a sensor and detects an abnormality of a facility controlled by a control signal, the abnormality detection program for causing a computer to execute:

a reliability process to obtain an abnormality degree of a control signal in a specific time range by inputting to a control signal model which is a model that is generated based on training data which is a feature amount of time series data of a past control signal and outputs the abnormality degree for each control signal from the time series data of the control signal, the time series data of the control signal in the specific time range of an abnormality detection result detected in a sensor signal obtained from the sensor, as verification data, and to calculate the reliability of the control signal in the specific time range and;

an abnormality diagnosis process to output information in which the reliability of the control signal in the specific time range is added to the abnormality detection result in the specific time range, as an abnormality diagnosis result.

# Fig. 1

100: ABNORMALITY DETECTION APPARATUS

# Fig. 2

100: ABNORMALITY DETECTION APPARATUS

INPUT INTERFACE — 930

921: MEMORY

140: MEMORY UNIT

910: PROCESSOR

MODEL GENERATION UNIT — 110

CORRESPONDENCE INFORMATION — 141

ABNORMALITY DETECTION TECHNIQUE INFORMATION — 142

950

RELIABILITY CALCULATION UNIT — 120

CONTROL SIGNAL TIME SERIES DATA — 143

COMMUNICATION DEVICE

ABNORMALITY DIAGNOSIS UNIT — 130

CONTROL SIGNAL MODEL — 144

ABNORMALITY DETECTION RESULT INFORMATION — 145

AUXILIARY STORAGE DEVICE — 922

OUTPUT INTERFACE — 940

ABNORMALITY DIAGNOSIS RESULT — 146

EP 4 567 536 A1

# Fig. 3

EP 4 567 536 A1

141: CORRESPONDENCE INFORMATION

| SENSOR SIGNAL ID | CONTROL SIGNAL ID |
|---|---|
| S0001, S0002, S0003, S0004 | C0001, C0002, C0003 |
| . . . ||

# Fig. 4

142: ABNORMALITY DETECTION TECHNIQUE INFORMATION

| SENSOR SIGNAL ID | ABNORMALITY DETECTION TECHNIQUE | INPUT DATA | START TIME | END TIME | DIMENSION OF INPUT DATA | PARAMETER 1 | |
|---|---|---|---|---|---|---|---|
| S0001, S0002, S0003, S0004 | Isolate-forest | TIME SERIES VALUE AT SPECIFIC TIME | 2020-01-01 00:00:00 | 2021-01-01 00:00:00 | NUMBER OF SENSOR SIGNAL IDs | NUMBER OF DECISION TREES=100 | · · · |
| · · · | | | | | | | |

EP 4 567 536 A1

# Fig. 5

EP 4 567 536 A1

143: CONTROL SIGNAL TIME SERIES DATA

| DATE AND TIME | C0001 |
|---|---|
| 2020-01-01 00:00:00 | 400 |
| 2020-01-01 00:01:00 | 398 |
| 2020-01-01 00:02:00 | 398 |
| 2020-01-01 00:03:00 | 399 |
| 2020-01-01 00:04:00 | 400 |
| 2020-01-01 00:05:00 | 401 |
| ⋮ | |

# Fig. 6

EP 4 567 536 A1

145: ABNORMALITY DETECTION RESULT INFORMATION

| SENSOR SIGNAL ID | ABNORMALITY START DATE AND TIME | ABNORMALITY END DATE AND TIME |
|---|---|---|
| S0001 | 2021-06-01 00:00:00 | 2021-06-01 00:15:00 |
| · · · | | |

# Fig. 7

```
                              START

    DECIDE ABNORMALITY DETECTION TECHNIQUE FOR EACH CONTROL SIGNAL          S001

    CREATE INPUT FOR ABNORMALITY DETECTION TECHNIQUE FOR EACH CONTROL SIGNAL S002

    CREATE CONTROL SIGNAL MODEL FOR EACH CONTROL SIGNAL                      S003

    STORE CONTROL SIGNAL MODEL FOR EACH CONTROL SIGNAL                       S004

                               END
```

Fig. 8

| CONTROL SIGNAL NAME | SENSOR SIGNAL ID | ABNORMALITY DETECTION TECHNIQUE | INPUT DATA | DIMENSION OF INPUT DATA | START TIME | END TIME | PARAMETER 1 | |
|---|---|---|---|---|---|---|---|---|
| C0001, C0002, C0003 | S0001, S0002, S0003, S0004 | Isolate-forest | TIME SERIES VALUE AT SPECIFIC TIME | NUMBER OF SENSOR SIGNAL IDs | 2020-01-01 00:00:00 | 2021-01-01 00:00:00 | NUMBER OF DECISION TREES=100 | · · · |
| . . . | | | | | | | | |

# Fig. 9

```
┌─────────────────────────────────────────────────────────────────────┐
│                              START                                    │
└─────────────────────────────────────────────────────────────────────┘
                                  │
                                  ▼
┌─────────────────────────────────────────────────────────────────────┐   S101
│    DECIDE ABNORMALITY DETECTION TECHNIQUE FOR EACH CONTROL SIGNAL     │
└─────────────────────────────────────────────────────────────────────┘
                                  │
                                  ▼
┌─────────────────────────────────────────────────────────────────────┐   S102
│   CREATE INPUT FOR ABNORMALITY DETECTION TECHNIQUE FOR EACH CONTROL   │
│                               SIGNAL                                   │
└─────────────────────────────────────────────────────────────────────┘
                                  │
                                  ▼
┌─────────────────────────────────────────────────────────────────────┐   S103
│ CALCULATE ABNORMALITY DEGREE FOR EACH CONTROL SIGNAL USING CONTROL    │
│                         SIGNAL MODEL                                   │
└─────────────────────────────────────────────────────────────────────┘
                                  │
                                  ▼
┌─────────────────────────────────────────────────────────────────────┐   S104
│   CALCULATE RELIABILITY BASED ON ABNORMALITY DEGREE FOR EACH CONTROL  │
│                               SIGNAL                                   │
└─────────────────────────────────────────────────────────────────────┘
                                  │
                                  ▼
┌─────────────────────────────────────────────────────────────────────┐
│                               END                                     │
└─────────────────────────────────────────────────────────────────────┘
```

EP 4 567 536 A1

# Fig. 10

CORRESPONDENCE INFORMATION 141

| SENSOR SIGNAL ID | CONTROL SIGNAL ID |
|---|---|
| S0001, S0002, S0003, S0004 | C0001, C0002, C0003 |
| ... | |

ABNORMALITY DETECTION RESULT AND RELIABILITY

| S0001, S0002, S0003, S0004: ABNORMAL |
|---|

| C0001, C0002, C0003: 0. 3 |
|---|

DETERMINATION RELATED TO SUFFICIENCY OF TRAINING DATA

| SENSOR SIGNAL ID | DETERMINATION |
|---|---|
| S0001, S0002, S0003, S0004 | 0. 3 ⇒ CONTROL STATE IN WHICH TRAINING DATA IS EXTREMELY LOW |
| ... | |

ABNORMALITY DIAGNOSIS RESULT 146

| SENSOR SIGNAL ID | DIAGNOSIS RESULT | RELIABILITY |
|---|---|---|
| S0001, S0002, S0003, S0004 | ABNORMAL CONTROL STATE IN WHICH TRAINING DATA IS EXTREMELY LOW | 0. 3 |
| ... | | |

EP 4 567 536 A1

## Fig. 11

```
                    ┌──────────────────────────────────────────────────────────────┐
                    │                         START                                 │
                    └──────────────────────────────────────────────────────────────┘
                                            │
                    ┌──────────────────────────────────────────────────────────────┐   S201
                    │  OBTAIN CORRESPONDENCE BETWEEN SENSOR SIGNAL AND CONTROL SIGNAL│
                    └──────────────────────────────────────────────────────────────┘
                                            │
                    ┌──────────────────────────────────────────────────────────────┐   S202
                    │ OBTAIN ABNORMALITY DETECTION RESULT OF SENSOR SIGNAL INCLUDED  │
                    │ IN CORRESPONDENCE AND RELIABILITY FOR EACH CONTROL SIGNAL      │
                    │ INCLUDED IN CORRESPONDENCE                                     │
                    └──────────────────────────────────────────────────────────────┘
                                            │
                    ┌──────────────────────────────────────────────────────────────┐   S203
                    │ SEARCH FOR RELIABILITY CORRESPONDING TO ABNORMALITY DETECTION  │
                    │ RESULT OF SENSOR SIGNAL AND CONVERT ABNORMALITY DETECTION      │
                    │ RESULT ACCORDING TO RELIABILITY                                │
                    └──────────────────────────────────────────────────────────────┘
                                            │
                    ┌──────────────────────────────────────────────────────────────┐   S204
                    │        CREATE ABNORMALITY DIAGNOSIS RESULT OF SENSOR SIGNAL    │
                    └──────────────────────────────────────────────────────────────┘
                                            │
                    ┌──────────────────────────────────────────────────────────────┐
                    │                          END                                  │
                    └──────────────────────────────────────────────────────────────┘
```

EP 4 567 536 A1

# Fig. 12

```
                          ┌─────────────────────────────┐
                          │            START            │
                          └─────────────────────────────┘
                                        │
                                        ▼
    ┌──────────────────────────────────────────────────────────────┐
    │ OBTAIN DATA FROM CORRESPONDENCE INFORMATION BETWEEN SIGNALS   │ ── S301
    └──────────────────────────────────────────────────────────────┘
                                        │
                                        ▼
    ┌──────────────────────────────────────────────────────────────┐
    │ OBTAIN DATA FROM ABNORMALITY DETECTION TECHNIQUE INFORMATION  │ ── S302
    └──────────────────────────────────────────────────────────────┘
                                        │
                                        ▼
    ┌──────────────────────────────────────────────────────────────┐
    │ OBTAIN DATA FROM CONTROL SIGNAL TIME SERIES DATA             │ ── S303
    └──────────────────────────────────────────────────────────────┘
                                        │
                                        ▼
    ┌──────────────────────────────────────────────────────────────┐
    │ GENERATE CONTROL SIGNAL MODELS FOR ALL CONTROL SIGNALS       │ ── S304
    └──────────────────────────────────────────────────────────────┘
                                        │
                                        ▼
    ┌──────────────────────────────────────────────────────────────┐
    │ STORE CONTROL SIGNAL MODELS IN MEMORY UNIT                   │ ── S305
    └──────────────────────────────────────────────────────────────┘
                                        │
                                        ▼
                          ┌─────────────────────────────┐
                          │             END             │
                          └─────────────────────────────┘
```

EP 4 567 536 A1

## Fig. 13

```
                           ┌─────────────────────────────────────────────┐
                           │                    START                    │
                           └─────────────────────────────────────────────┘
                                              │
                           ┌─────────────────────────────────────────────┐  S401
                           │ OBTAIN DATA FROM CORRESPONDENCE INFORMATION  │
                           └─────────────────────────────────────────────┘
                                              │
                           ┌─────────────────────────────────────────────┐  S402
                           │ OBTAIN DATA FROM ABNORMALITY DETECTION       │
                           │ TECHNIQUE INFORMATION                        │
                           └─────────────────────────────────────────────┘
                                              │
                           ┌─────────────────────────────────────────────┐  S403
                           │ OBTAIN DATA FROM CONTROL SIGNAL TIME         │
                           │ SERIES DATA                                  │
                           └─────────────────────────────────────────────┘
                                              │
                           ┌─────────────────────────────────────────────┐  S404
                           │ OBTAIN DATA FROM CONTROL SIGNAL MODEL        │
                           └─────────────────────────────────────────────┘
                                              │
                           ┌─────────────────────────────────────────────┐  S405
                           │ CALCULATE RELIABILITY FOR ABNORMALITY        │
                           │ DETECTION RESULTS OF ALL SENSOR SIGNALS      │
                           └─────────────────────────────────────────────┘
                                              │
                           ┌─────────────────────────────────────────────┐  S406
                           │ OBTAIN DATA FROM ABNORMALITY DETECTION       │
                           │ RESULT INFORMATION ON SENSOR SIGNAL          │
                           └─────────────────────────────────────────────┘
                                              │
                           ┌─────────────────────────────────────────────┐  S407
                           │ CONVERT ABNORMALITY DETECTION RESULTS OF ALL │
                           │ SENSOR SIGNALS BASED ON RELIABILITY          │
                           └─────────────────────────────────────────────┘
                                              │
                           ┌─────────────────────────────────────────────┐
                           │                     END                     │
                           └─────────────────────────────────────────────┘
```

EP 4 567 536 A1

# Fig. 14

100: ABNORMALITY DETECTION APPARATUS

INPUT INTERFACE — 930

921: MEMORY

140: MEMORY UNIT

909: ELECTRONIC CIRCUIT

950

COMMUNICATION DEVICE

110

MODEL GENERATION UNIT

120

RELIABILITY CALCULATION UNIT

130

ABNORMALITY DIAGNOSIS UNIT

141

CORRESPONDENCE INFORMATION

142

ABNORMALITY DETECTION TECHNIQUE INFORMATION

143

CONTROL SIGNAL TIME SERIES DATA

144

CONTROL SIGNAL MODEL

145

ABNORMALITY DETECTION RESULT INFORMATION

146

ABNORMALITY DIAGNOSIS RESULT

922

AUXILIARY STORAGE DEVICE

940

OUTPUT INTERFACE

EP 4 567 536 A1

33

# Fig. 15

141: CORRESPONDENCE INFORMATION

| SENSOR SIGNAL ID | CONTROL SIGNAL ID | COMBINATION METHOD | OUTPUT CONTENT OF RELIABILITY |
|---|---|---|---|
| S0001 | C0001 | — | — |
| S0002 | C0001, C0002 | LOGICAL SUM | LOWEST |
| · · · | | | |

EP 4 567 536 A1

# Fig. 16

EP 4 567 536 A1

142: ABNORMALITY DETECTION TECHNIQUE INFORMATION

| SENSOR SIGNAL ID | ABNORMALITY DETECTION TECHNIQUE | INPUT DATA | DIMENSION OF INPUT DATA | PARAMETER 1 | |
|---|---|---|---|---|---|
| S0001 | K-NEAREST NEIGHBOR ALGORITHM | TIME SERIES DATA | 10 DIMENSIONS | NUMBER OF NEIGHBORHOODS=2 | · · · |
| S0002 | K-NEAREST NEIGHBOR ALGORITHM | HIGH-FREQUENCY COMPONENT | 10 DIMENSIONS | NUMBER OF NEIGHBORHOODS=3 | |
| · · · | | | | | |

## Fig. 17

| CONTROL SIGNAL ID | SENSOR SIGNAL ID | ABNORMALITY DETECTION TECHNIQUE | INPUT DATA | DIMENSION OF INPUT DATA | PARAMETER 1 | |
|---|---|---|---|---|---|---|
| C0001 | S0001 | K-NEAREST NEIGHBOR ALGORITHM | TIME SERIES DATA | 10 DIMENSIONS | NUMBER OF NEIGHBORHOODS=2 | ... |
| C0001, C0002 | S0002 | K-NEAREST NEIGHBOR ALGORITHM | HIGH-FREQUENCY COMPONENT | 10 DIMENSIONS | NUMBER OF NEIGHBORHOODS=3 | |
| . . . | | | | | | |

| CONTROL SIGNAL ID | SENSOR SIGNAL ID | ABNORMALITY DETECTION TECHNIQUE | INPUT DATA | DIMENSION OF INPUT DATA | PARAMETER 1 | |
|---|---|---|---|---|---|---|
| C0001 | S0001 | K-NEAREST NEIGHBOR ALGORITHM | TIME SERIES DATA | 10 DIMENSIONS | NUMBER OF NEIGHBORHOODS=2 | ... |
| C0001 | S0002 | K-NEAREST NEIGHBOR ALGORITHM | HIGH-FREQUENCY COMPONENT | 10 DIMENSIONS | NUMBER OF NEIGHBORHOODS=3 | |
| C0002 | S0002 | K-NEAREST NEIGHBOR ALGORITHM | HIGH-FREQUENCY COMPONENT | 10 DIMENSIONS | NUMBER OF NEIGHBORHOODS=3 | |
| . . . | | | | | | |

# Fig. 18

CORRESPONDENCE INFORMATION 141

| SENSOR SIGNAL ID | CONTROL SIGNAL ID | COMBINATION METHOD | OUTPUT CONTENT OF RELIABILITY |
|---|---|---|---|
| S0001 | C0001 | — | — |
| S0002 | C0001, C0002 | LOGICAL SUM | LOWEST |
| ... | | | |

RESULT OF OUTLIER DETECTION

| | RELIABILITY |
|---|---|
| S0001: NORMAL | C0001: 1.2 |
| S0002: ABNORMAL | C0001: 1.4 |
| | C0002: 0.3 |

DETERMINATION RELATED TO SUFFICIENCY OF TRAINING DATA

| SENSOR SIGNAL ID | DETERMINATION |
|---|---|
| S0001 | 0 (C0001)  ⇒  TRAINING DATA IS SUFFICIENT |
| S0002 | 0 (C0001) ‖1 (C0002) = 1 (LOGICAL SUM OF C0001 AND C0002) ⇒ CONTROL STATE IN WHICH TRAINING DATA IS EXTREMELY LOW |
| ... | |

CONVERT RELIABILITY TO LOGICAL VALUE

| |
|---|
| S0001-C0001: 0 |
| S0002-C0001: 0 |
| S0002-C0002: 1 |

ABNORMALITY DIAGNOSIS RESULT 146

| SENSOR SIGNAL ID | DIAGNOSIS RESULT | RELIABILITY |
|---|---|---|
| S0001 | NORMAL | 1.2 |
| S0002 | ABNORMAL IN CONTROL STATE IN WHICH TRAINING DATA IS EXTREMELY LOW | 0.3 |
| ... | | |

EP 4 567 536 A1

## Fig. 19

START

OBTAIN CORRESPONDENCE BETWEEN SENSOR SIGNAL AND CONTROL SIGNAL — S201

OBTAIN ABNORMALITY DETECTION RESULT OF SENSOR SIGNAL INCLUDED IN CORRESPONDENCE AND RELIABILITY FOR EACH CONTROL SIGNAL INCLUDED IN CORRESPONDENCE — S202

CONVERT RELIABILITY FOR EACH CONTROL SIGNAL TO LOGICAL VALUE — S203a

SEARCH FOR LOGICAL VALUE CORRESPONDING TO ABNORMALITY DETECTION RESULT OF SENSOR SIGNAL AND CONVERT ABNORMALITY DETECTION RESULT ACCORDING TO COMBINATION OF LOGICAL VALUES — S203b

CREATE ABNORMALITY DIAGNOSIS RESULT OF SENSOR SIGNAL — S204

END

EP 4 567 536 A1

# Fig. 20

100: ABNORMALITY DETECTION APPARATUS

EP 4 567 536 A1

# Fig. 21

147: EVENT SIGNAL INFORMATION

| DATE AND TIME | EVENT |
|---|---|
| 2020-01-01 01:00:00 | PERFORMANCE OF ADJUSTMENT OF POWER GENERATION AMOUNT (OUTPUT 100%) |
| 2020-01-01 01:30:00 | COMPLETION OF ADJUSTMENT OF POWER GENERATION AMOUNT (OUTPUT 100%) |
| 2020-01-01 12:00:00 | BOILER TEMPERATURE WARNING |
| 2020-01-02 12:00:00 | PERFORMANCE OF ADJUSTMENT OF POWER GENERATION AMOUNT (OUTPUT 80%) |
| ⋮ | |

EP 4 567 536 A1

# Fig. 22

MODE 1
(TRANSITION
PERIOD)

MODE 2
(POWER GENERATION
AMOUNT 100%)

EVENT

PERFORMANCE OF ADJUSTMENT OF
POWER GENERATION AMOUNT
(OUTPUT 80%)

COMPLETION OF ADJUSTMENT OF
POWER GENERATION AMOUNT
(OUTPUT 100%)

PERFORMANCE OF ADJUSTMENT OF
POWER GENERATION AMOUNT
(OUTPUT 100%)

2020-01-01
01:00:00

2020-01-01
01:30:00

2020-01-02
12:00:00

DATE
AND
TIME

# Fig. 23

EP 4 567 536 A1

```
┌─────────────────────────────────────────────────────────────────────┐
│                              START                                    │
└─────────────────────────────────────────────────────────────────────┘
                                   │
                                   ▼
┌─────────────────────────────────────────────────────────────────────┐
│ EXTRACT FROM EVENT SIGNAL INFORMATION,  TIME OF EVENT SUBJECT TO MODE │   S501
│                           DIVISION                                    │
└─────────────────────────────────────────────────────────────────────┘
                                   │
                                   ▼
┌─────────────────────────────────────────────────────────────────────┐
│ EXTRACT FROM EVENT SIGNAL INFORMATION,  PERIOD BOUNDED BY TWO TIMES   │   S502
└─────────────────────────────────────────────────────────────────────┘
                                   │
                                   ▼
┌─────────────────────────────────────────────────────────────────────┐
│ DECIDE FROM EVENT SIGNAL INFORMATION,  MODE OF EACH PERIOD            │   S503
└─────────────────────────────────────────────────────────────────────┘
                                   │
                                   ▼
┌─────────────────────────────────────────────────────────────────────┐
│                               END                                     │
└─────────────────────────────────────────────────────────────────────┘
```

# Fig. 24

```
                    ┌─────────────────────────────────────────────┐
                    │                    START                    │
                    └─────────────────────────────────────────────┘
                                        │
                    ┌─────────────────────────────────────────────┐
                    │   OBTAIN DATA FROM EVENT SIGNAL INFORMATION  │ ── S601
                    └─────────────────────────────────────────────┘
                                        │
                    ┌─────────────────────────────────────────────┐
                    │      SPECIFY MODE BY MODE DIVISION UNIT      │ ── S602
                    └─────────────────────────────────────────────┘
                                        │
                    ┌─────────────────────────────────────────────┐
                    │  OBTAIN DATA FROM CORRESPONDENCE INFORMATION │ ── S301
                    └─────────────────────────────────────────────┘
                                        │
                    ┌─────────────────────────────────────────────┐
                    │ OBTAIN DATA FROM ABNORMALITY DETECTION       │ ── S302
                    │ TECHNIQUE INFORMATION                        │
                    └─────────────────────────────────────────────┘
                                        │
                    ┌─────────────────────────────────────────────┐
                    │ OBTAIN DATA FROM CONTROL SIGNAL TIME SERIES  │ ── S303
                    │ DATA                                         │
                    └─────────────────────────────────────────────┘
                                        │
                    ┌─────────────────────────────────────────────┐
                    │ GENERATE MODEL FOR ALL CONTROL SIGNALS FOR   │ ── S304a
                    │ EACH MODE                                    │
                    └─────────────────────────────────────────────┘
                                        │
                    ┌─────────────────────────────────────────────┐
                    │ STORE MODELS FOR ALL CONTROL SIGNALS FOR     │ ── S305a
                    │ EACH MODE IN MEMORY UNIT                     │
                    └─────────────────────────────────────────────┘
                                        │
              NO    ◇─────────────────────────────────────────────◇ ── S603
            ┌───────┤ HAVE S304a AND S305a BEEN                    │
            │       │ PERFORMED FOR ALL MODES?                     │
            │       ◇─────────────────────────────────────────────◇
            │                           │ YES
            │       ┌─────────────────────────────────────────────┐
            │       │                    END                      │
            │       └─────────────────────────────────────────────┘
```

EP 4 567 536 A1

## Fig. 25

START

↓

OBTAIN DATA FROM EVENT SIGNAL INFORMATION — S601

↓

SPECIFY MODE BY MODE DIVISION UNIT — S602

↓

OBTAIN DATA FROM CORRESPONDENCE INFORMATION — S401

↓

OBTAIN DATA FROM ABNORMALITY DETECTION TECHNIQUE INFORMATION — S402

↓

OBTAIN DATA FROM CONTROL SIGNAL TIME SERIES DATA — S403

↓

OBTAIN DATA FOR EACH MODE FROM CONTROL SIGNAL MODEL — S404a

↓

CALCULATE RELIABILITY FOR EACH MODE FOR ABNORMALITY DETECTION RESULTS OF ALL SENSOR SIGNALS — S405a

↓

OBTAIN DATA FROM ABNORMALITY DETECTION RESULT INFORMATION ON SENSOR SIGNAL — S406

↓

CONVERT ABNORMALITY DETECTION RESULTS OF ALL SENSOR SIGNALS BASED ON RELIABILITY — S407

↓

END

## INTERNATIONAL SEARCH REPORT

| International application No. |
|---|
| **PCT/JP2022/033076** |

**A. CLASSIFICATION OF SUBJECT MATTER**

*G05B 23/02*(2006.01)i
FI:   G05B23/02 302V

According to International Patent Classification (IPC) or to both national classification and IPC

**B. FIELDS SEARCHED**

Minimum documentation searched (classification system followed by classification symbols)

G05B23/02

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2020/245968 A1 (MITSUBISHI ELECTRIC CORPORATION) 10 December 2020 (2020-12-10) paragraphs [0016]-[0100], fig. 1-10 | 1-8 |
| A | JP 2011-70635 A (HITACHI LTD) 07 April 2011 (2011-04-07) entire text, all drawings | 1-8 |
| A | JP 2019-95930 A (TOSHIBA CORP) 20 June 2019 (2019-06-20) entire text, all drawings | 1-8 |
| A | JP 2021-135566 A (SEIKO EPSON CORP) 13 September 2021 (2021-09-13) entire text, all drawings | 1-8 |
| A | JP 2009-186463 A (ROLLS ROYCE PLC) 20 August 2009 (2009-08-20) entire text, all drawings | 1-8 |

☐ Further documents are listed in the continuation of Box C.      ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **02 November 2022** | **15 November 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT
### Information on patent family members

International application No.

**PCT/JP2022/033076**

| Patent document cited in search report | | | Publication date (day/month/year) | Patent family member(s) | | | Publication date (day/month/year) |
|---|---|---|---|---|---|---|---|
| WO | 2020/245968 | A1 | 10 December 2020 | (Family: none) | | | |
| JP | 2011-70635 | A | 07 April 2011 | US<br>entire text, all drawings<br>WO | 2012/0290879<br><br>2011/024382 | A1<br><br>A1 | |
| JP | 2019-95930 | A | 20 June 2019 | (Family: none) | | | |
| JP | 2021-135566 | A | 13 September 2021 | (Family: none) | | | |
| JP | 2009-186463 | A | 20 August 2009 | US<br>entire text, all drawings<br>GB<br>EP | 2009/0187381<br><br>2456567<br>2081132 | A1<br><br>A<br>A2 | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015172945 A